# EUROPÄISCHE PATENTSCHRIFT

(11) **EP 3 957 692 B1**
(45) Veröffentlichungstag und Bekanntmachung des Hinweises auf die Patenterteilung: **15.05.2024**
(21) Anmeldenummer: 21191681.2
(22) Anmeldetag: 17.08.2021
(51) Int. Cl.: C09D 11/037, C09D 11/54, C09D 11/38, C09D 11/32

(54) **PRIMER-ZUSAMMENSETZUNG**
PRIMER COMPOSITION
COMPOSITION DE COUCHE DE FOND

(30) Priorität: 18.08.2020 DE 102020210487
(43) Veröffentlichungstag der Anmeldung: 23.02.2022
(73) Patentinhaber: Marabu GmbH & Co. KG, 71732 Tamm (DE)
(72) Erfinder: Brückner, Christine, 71701 Schwieberdingen (DE); Engel, Stefan, 90607 Rückersdorf (DE); Lifka, Thorsten, 8635 Dürnten (CH)
(74) Vertreter: Patentanwälte Ruff, Wilhelm, Beier, Dauster & Partner mbB

(56) Entgegenhaltungen:
- EP-A1- 3 453 687
- WO-A1-98/27170
- CN-A- 105 862 409
- US-A1- 2010 119 697
- US-A1- 2018 319 701

## Beschreibung

Die Erfindung betrifft eine Primer-Zusammensetzung, insbesondere zum Beschichten, insbesondere Bedrucken, eines Substrats, ein Verfahren zum Beschichten, insbesondere Bedrucken, eines Substrats, ein mindestens teilweise mit der Primer-Zusammensetzung beschichtetes Substrat, ein Kit sowie eine Verwendung der Primer-Zusammensetzung.

Die Bedruckung von bestimmten Substraten, wie beispielsweise Glas, ist traditionell schwierig. Ohne besondere Maßnahmen zeigen auf Substrate aufgebrachte Druckfarben häufig eine unbefriedigende Haftung, insbesondere bei Einwirkung von Feuchtigkeit.

Diesem Problem wird üblicherweise durch die Verwendung einer sogenannten Primer-Zusammensetzung, d.h. einer Haftvermittler-Zusammensetzung, entgegengewirkt. Die Primer-Zusammensetzung weist Substanzen auf, die eine "chemische Brücke" zwischen einem Untergrund und einer hierauf aufgebrachten Druckfarbe oder Tinten-Zusammensetzung bilden. Die haftvermittelnden Substanzen weisen typischerweise zwei unterschiedliche funktionale Gruppen auf. Die eine funktionale Gruppe ist für eine Verbindung mit dem Substrat und die andere funktionale Gruppe für eine Verbindung mit einer auf das Substrat aufgebrachten Druckfarbe oder Tinte verantwortlich.

Problematisch ist jedoch, dass eine Überwachung der Primer-Zusammensetzung, insbesondere hinsichtlich deren Funktion, in einem laufenden Druckverfahren kaum möglich ist. Insbesondere können während eines Druckvorgangs in der Primerschicht entstehende Lücken kaum detektiert werden.

Ein weiteres Problem besteht darin, dass Primer-Zusammensetzungen entsprechend der vorherrschenden Meinung und den von Druckkopfherstellern für Tinten empfohlenen Viskositätsbereichen eine gewisse Mindestviskosität besitzen müssen, um in einem Druckverfahren, insbesondere Digitaldruckverfahren, eingesetzt werden zu können.

Die Erfindung stellt sich daher die Aufgabe, eine Primer-Zusammensetzung, insbesondere eine digitalverdruckbare Primer-Zusammensetzung, bereitzustellen, welche die eingangs im Zusammenhang konventioneller Primer genannten Nachteile wenigstens teilweise umgeht. Des Weiteren stellt sich die Erfindung die Aufgabe, Verfahren zum Beschichten, vorzugsweise Bedrucken, eines Substrats, ein Kit sowie ein mit der Primer-Zusammensetzung beschichtetes Substrat bereitzustellen.

Diese Aufgaben werden gelöst durch eine Primer-Zusammensetzung mit den Merkmalen des unabhängigen Anspruchs 1, durch ein Verfahren gemäß Anspruch 12 durch ein Substrat gemäß Anspruch 13 sowie durch ein ausschließlich in der Beschreibung offenbartes Verfahren und Kit. Bevorzugte Ausgestaltungen der Erfindung sind in den abhängigen Ansprüchen sowie in der Beschreibung definiert. Der Wortlaut sämtlicher Ansprüche wird hiermit durch Bezugnahme ausdrücklich zum Inhalt dieser Beschreibung gemacht.

Gemäß einem ersten Aspekt betrifft die Erfindung eine Primer-Zusammensetzung, insbesondere zum Beschichten, insbesondere Bedrucken, bevorzugt Digitalbedrucken, besonders bevorzugt Tintenstrahlbedrucken, eines Substrats.

Die Primer-Zusammensetzung ist im Anspruch 1 definiert.

Das Substrat kann insbesondere ein Material aufweisen oder aus einem Material bestehen, welches ausgewählt ist aus der Gruppe bestehend aus Kunststoff, Glas, Keramik und Metall. Vorzugsweise handelt es sich bei dem Substrat um Glas.

Der Kunststoff kann beispielsweise ausgewählt sein aus der Gruppe bestehend aus Polyvinylchlorid, Polymethylmethacrylat, Polyethylen, Polypropylen, Acrylnitril-Butadien-StyrolCopolymer, Polystyrol, Polyamid, Copolymere von mindestens zwei der genannten Kunststoffe und Blends, d.h. Mischungen, von mindestens zwei der genannten Kunststoffe.

Das Substrat kann ferner insbesondere als Behälter oder Flasche, insbesondere Glas-Behälter oder Glas-Flasche, gestaltet sein. Alternativ kann es sich bei dem Substrat um ein plattenförmig gestaltetes Substrat, d.h. um eine Platte, handeln.

Unter dem Ausdruck "Primer-Zusammensetzung" soll im Sinne der vorliegenden Erfindung eine Zusammensetzung verstanden werden, welche mindestens einen Primer (Haftvermittler) und mithin haftvermittelnde Eigenschaften aufweist. Vorzugsweise wirkt zumindest das mindestens eine Organosilan der vorliegenden Erfindung als Primer oder Haftvermittler.

Der Ausdruck "mindestens ein Fluoreszenzfarbstoff" soll im Sinne der vorliegenden Erfindung ein Fluoreszenzfarbstoff, d.h. ein Typ eines Fluoreszenzfarbstoffes, oder eine Vielzahl von unterschiedlichen Fluoreszenzfarbstoffen, d.h. zwei oder mehr unterschiedliche Fluoreszenzfarbstoffe, bedeuten. Dementsprechend kann die Primer-Zusammensetzung beispielsweise nur einen Typ eines Fluoreszenzfarbstoffes oder eine Kombination oder Mischung von unterschiedlichen Fluoreszenzfarbstoffen aufweisen.

Bevorzugt handelt es sich bei dem mindestens einen Fluoreszenzfarbstoff um mindestens einen organischen Fluoreszenzfarbstoff.

Besonders bevorzugt weist die Primer-Zusammensetzung abgesehen von dem mindestens einen Fluoreszenzfarbstoff keinen weiteren Farbstoff, insbesondere kein weiteres Farbmittel, auf. Mit anderen Worten handelt es sich bei dem mindestens einen Fluoreszenzfarbstoff besonders bevorzugt um den einzigen Farbstoff, insbesondere das einzige Farbmittel, der Primer-Zusammensetzung. Dadurch können Verfärbungen beispielsweise einer nachträglich aufgebrachten Tinten-Zusammensetzung und/oder aufwendige und fehleranfällige Ausbleichungsmaßnahmen vor dem Aufbringen einer Tinten-Zusammensetzung vermieden werden.

Der Ausdruck "mindestens ein Organosilan" soll im Sinne der vorliegenden Erfindung ein Organosilan, d.h. ein Typ eines Organosilans, oder eine Vielzahl von unterschiedlichen Organosilanen, d.h. zwei oder mehr unterschiedliche Organosilane, bedeuten. Dementsprechend kann die Primer-Zusammensetzung beispielsweise nur einen Typ eines Organosilans oder eine Kombination oder Mischung von unterschiedlichen Organosilanen aufweisen.

Durch die erfindungsgemäße Primer-Zusammensetzung ist mit besonderem Vorteil eine Prozesskontrolle, insbesondere in einem laufenden Druckverfahren, bevorzugt Digitaldruckverfahren, besonders bevorzugt Tintenstrahldruckverfahren, erzielbar. Durch den mindestens einen Fluoreszenzfarbstoff ist nämlich eine Überwachung der Primerfunktion möglich. Insbesondere können hierdurch Fehler, wie beispielweise entstehende Lücken in einer aufgebrachten Primerschicht, rasch erkannt und behoben werden.

In Ausgestaltung der Erfindung fluoresziert der Fluoreszenzfarbstoff bei Einwirkung von ultravioletter Strahlung (UV-Strahlung). Bei dieser Ausgestaltung der Erfindung ist die Primer-Zusammensetzung somit bei Einwirkung von für das menschliche Auge sichtbarem Licht, d.h. bei Einwirkung von Licht mit einer Wellenlänge > 400 nm bis 780 nm, unsichtbar. Dadurch kann vorteilhafterweise die Beeinträchtigung einer Färbung einer etwaigen auf die Primer-Zusammensetzung aufgebrachten Tinten-Zusammensetzung vermieden werden. Gegenüber Primer-Zusammensetzungen mit konventionellen Farbstoffen und/oder Pigmenten sind somit aufwendige und risikobehaftete Ausbleichungsschritte entbehrlich.

Unter dem Ausdruck "ultraviolette Strahlung (UV-Strahlung)" soll im Sinne der vorliegenden Erfindung eine Strahlung in einem Wellenlängenbereich von 100 nm bis ≤ 410nm, insbesondere 100 nm bis < 400 nm, besonders bevorzugt 100 nm bis 395 nm, verstanden werden.

In weiterer Ausgestaltung der Erfindung ist der mindestens eine Fluoreszenzfarbstoff ein optischer Aufheller.

Der Fluoreszenzfarbstoff, insbesondere optische Aufheller, kann insbesondere ausgewählt sein aus der Gruppe bestehend aus Stilben-Verbindungen, Distyrylbenzol-Verbindungen, Distyrylbiphenyl-Verbindungen, Divinylstilben-Verbindungen, Triazinylaminostilben-Verbindungen, Stilbenyltriazol-Verbindungen, Stilbenylnaphthotriazol-Verbindungen, Bistriazolstilben-Verbindungen, Ethylen-Derivate, Phenylethylen-Derivate, Thiophen-Derivate, Cumarin-Derivate, Carbostyril-Derivate, 1,3-Diphenyl-2-pyrazoline, Naphthalimide, Verbindungen, bei denen ein kondensierter Aromat direkt mit einem Heteroaromaten, wie beispielsweise einem Thiazol, Pyrazol, Oxadiazol oder Triazin, verbunden ist, und Mischungen von wenigstens zwei der vorgenannten Fluoreszenzfarbstoffe, insbesondere optischen Aufheller.

Besonders bevorzugt ist der Fluoreszenzfarbstoff, insbesondere optische Aufheller, ausgewählt aus der Gruppe bestehend aus Stilben-Verbindungen, Distyrylbenzol-Verbindungen, Distyrylbiphenyl-Verbindungen, Distyrylpyridazin-Verbindungen, Distyrylpyrimidin-Verbindungen, Distyrylpyrazin-Verbindungen, Distyrylpyridin-Verbindungen, Distyryltriazin-Verbindungen (wie Distyryl-1,3,5-triazin-Verbindungen und/oder Distyryl-1,2,4-triazin-Verbindungen), Divinylstilben-Verbindungen, Triazinylaminostilben-Verbindungen, Stilbenyltriazol-Verbindungen, Stilbenylnaphthotriazol-Verbindungen, Bistriazolstilben-Verbindungen und Mischungen von wenigstens zwei der vorgenannten Fluoreszenzfarbstoffe, insbesondere optischen Aufheller.

Die Ethylen-Derivate und/oder Phenylethylen-Derivate und/oder Thiophen-Derivate können zwei hetero-aromatische Reste, wie beispielsweise Benzoxazol-Reste, aufweisen.

Bei den Naphthalimiden kann es sich beispielsweise um N-Methyl-4-methoxy-naphthalimid handeln.

Bei den Verbindungen, bei denen ein kondensierter Aromat direkt mit einem Heteroaromaten, wie beispielsweise einem Thiazol, Pyrazol, Oxadiazol oder Triazin, verbunden ist, kann es sich beispielsweise um 2,4-Dimethoxy-6-(1'-pyrenyl)-1,3,5-triazin handeln.

In weiterer Ausgestaltung der Erfindung hat der Fluoreszenzfarbstoff eine Struktur gemäß einer der nachfolgenden Formeln **1** bis **12:**

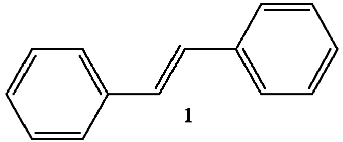

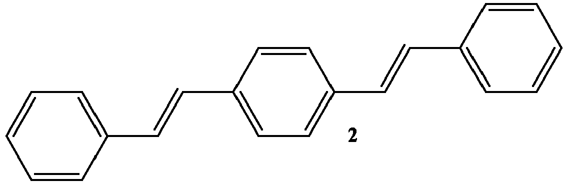

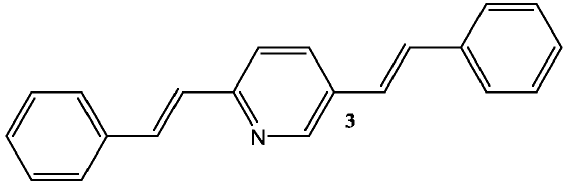

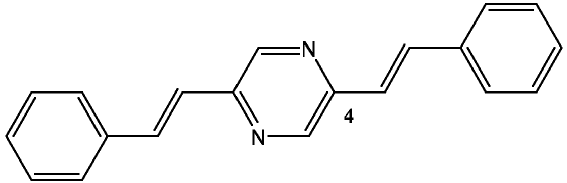

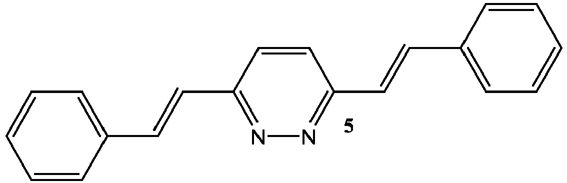

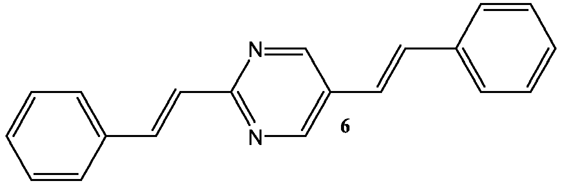

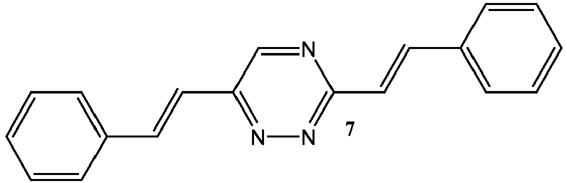

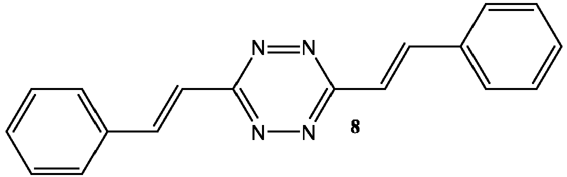

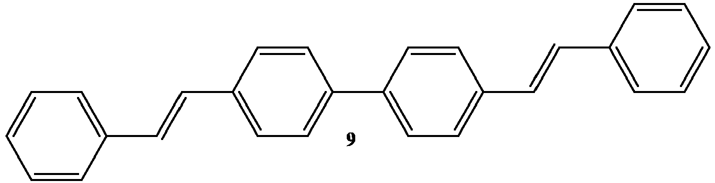

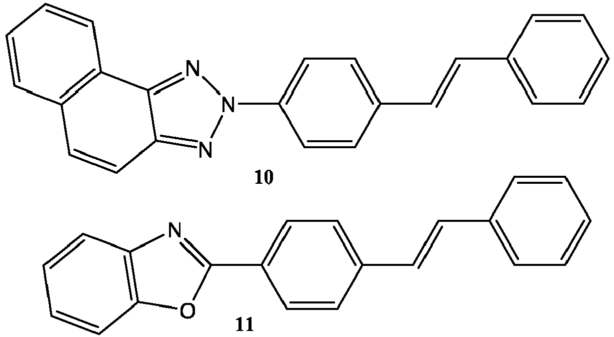

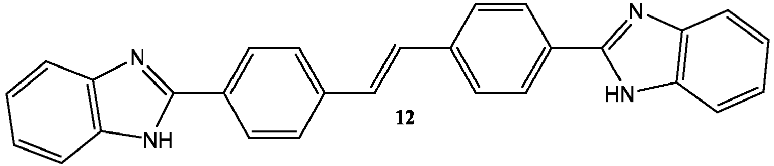

Bevorzugt kann/können einer oder mehrere der Ringe in jeder der obigen Formeln 1 bis **12** unabhängig voneinander durch eine oder mehrere Gruppen aus der Gruppe bestehend aus Alkylgruppe, Alkoxygruppe, Alkylcarbonylgruppe, Alkoxycarbonylgruppe, Acyloxygruppe, Carboxylgruppe, Nitrilgruppe, Aminogruppe, Hydroxylgruppe, Alkylsulfonylgruppe und Aminosulfonylgruppe substituiert sein.

Die Alkylgruppe, Alkoxygruppe, Alkylcarbonylgruppe, Alkoxycarbonylgruppe und Alkylsulfonylgruppe können unabhängig voneinander eine Kohlenstoffkette mit 1 Kohlenstoffatom bis 12 Kohlenstoffatomen, insbesondere 1 Kohlenstoffatom bis 8 Kohlenstoffatomen, bevorzugt 1 Kohlenstoffatom bis 6 Kohlenstoffatomen, aufweisen.

Die Alkylgruppe kann beispielsweise ausgewählt sein aus der Gruppe bestehend aus Methylgruppe, Ethylgruppe, Propylgruppe, Isopropylgruppe, Butylgruppe, 2-Butylgruppe, tert.-Butylgruppe, Pentylgruppe und Hexylgruppe.

Die Alkoxygruppe kann beispielsweise ausgewählt sein aus der Gruppe bestehend aus Methoxygruppe, Ethoxygruppe, Propoxygruppe, Isopropoxygruppe, n-Butoxygruppe, 2-Butoxygruppe, tert.-Butoxygruppe, Pentoxygruppe und Hexoxygruppe.

Die Alkylcarbonylgruppe kann beispielsweise ausgewählt sein aus der Gruppe bestehend aus Methylcarbonylgruppe, Ethylcarbonylgruppe, Propylcarbonylgruppe, Isopropylcarbonylgruppe, n-Butylcarbonylgruppe, 2-Butylcarbonylgruppe, tert.-Butylcarbonylgruppe Pentylcarbonylgruppe und Hexylcarbonylgruppe.

Die Alkoxycarbonylgruppe kann beispielsweise ausgewählt sein aus der Gruppe bestehend aus Methoxycarbonylgruppe, Ethoxycarbonylgruppe, Propoxycarbonylgruppe, Isopropoxycarbonylgruppe, n-Butoxycarbonylgruppe, 2-Butoxycarbonylgruppe, tert.-Butoxycarbonylgruppe, Pentoxycarbonylgruppe und Hexoxycarbonylgruppe.

Die Alkylsulfonylgruppe kann beispielsweise ausgewählt sein aus der Gruppe bestehend aus Methylsulfonylgruppe, Ethylsulfonylgruppe, Propylsulfonylgruppe, Isopropylsulfonylgruppe, n-Butylsulfonylgruppe, 2-Butylsulfonylgruppe, tert.-Butylsulfonylgruppe, Pentylsulfonylgruppe und Hexylsulfonylgruppe.

Bevorzugt hat der Fluoreszenzfarbstoff nachfolgende Formel **13:** 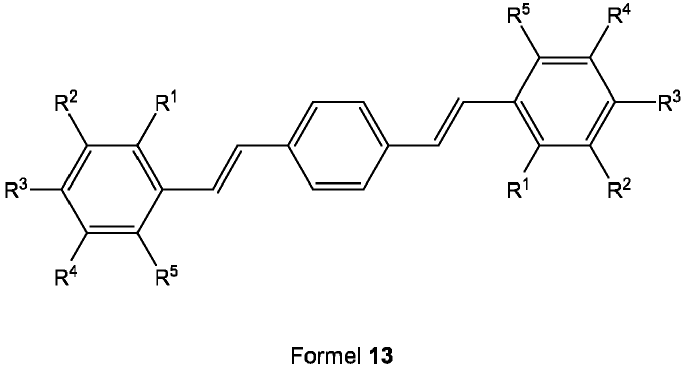 wobei
- R¹ = CH₃, R² - R⁵ = H oder
- R² - R⁴ = OCₙH₂ₙ₊₁, R¹ = R⁵ = H oder
- R¹ = CN, R² - R⁵ = H oder
- R³ = CN, R¹ = R² = R⁴ = R⁵ = H bedeuten.

Alternativ hat der Fluoreszenzfarbstoff bevorzugt nachfolgende Formel **14:** 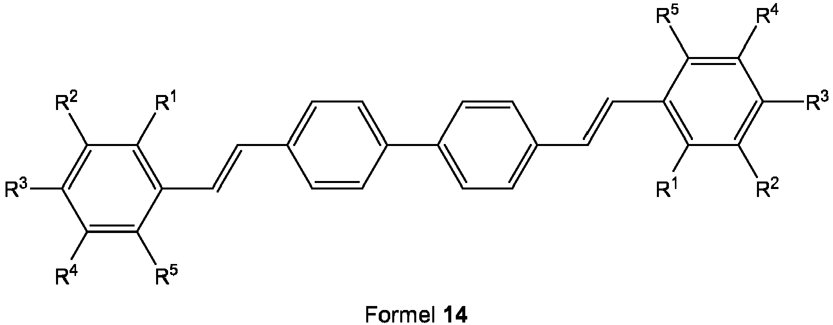 wobei
- R¹ - R⁴ = H und R⁵ = OCₙH₂ₙ₊₁ oder
- R² - R⁴ = OCₙH₂ₙ₊₁, R¹ = R⁵ = H bedeuten.

Alternativ hat der Fluoreszenzfarbstoff bevorzugt nachfolgende Formel **15:** 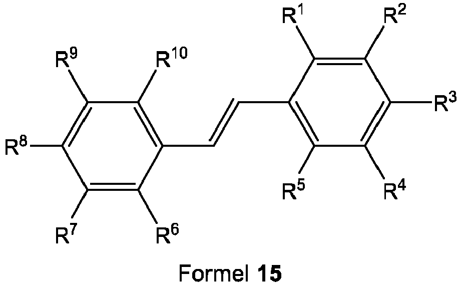 wobei
- R¹ - R¹⁰ = H oder
- R¹, R², R⁴ - R¹⁰ = H und R³ = OCH₃ oder
- R² - R⁴, R⁷ - R⁹ = OCₙH₂ₙ₊₁, R¹ = R⁵ = R⁶ = R¹⁰ = H oder
- R¹, R², R⁴ - R⁷, R⁹, R¹⁰ = H und R³, R⁸ = OCH₃ bedeuten.

Alternativ hat der Fluoreszenzfarbstoff bevorzugt nachfolgende Formel **16:** 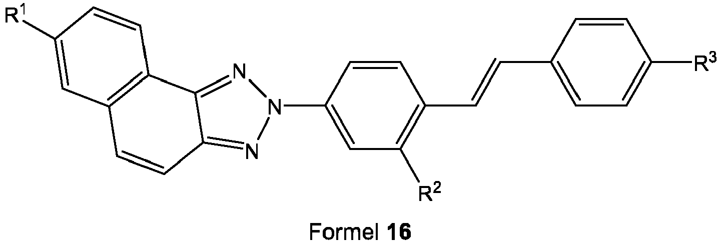 **wobei**
- R¹ = R³ = H und R² = SO₃C₆H₅ oder
- R¹ = H, R² = CN und R³ = CI bedeuten.

Alternativ hat der Fluoreszenzfarbstoff bevorzugt nachfolgende Formel **17:** 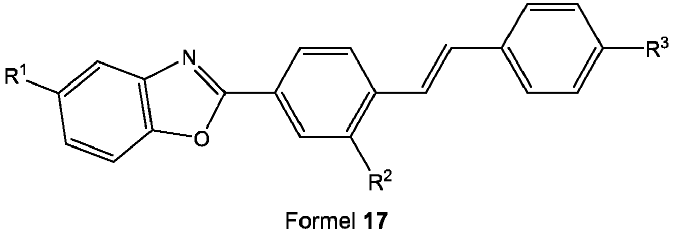 **wobei**
- R¹ = tert.-Butyl, R² = H und R³ = C₆H₅ oder
- R¹ = CH₃, R² = H, R³ = COOCH₃ oder
- R¹ = H, R² = H und R³ = 2-(4-Methyl-oxa-3,3-diazol) bedeuten.

Alternativ hat der Fluoreszenzfarbstoff bevorzugt nachfolgende Formel **18:** 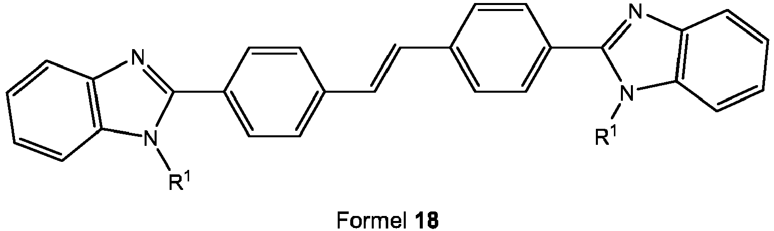 wobei
- R¹ = CH₃ bedeutet.

Alternativ hat der Fluoreszenzfarbstoff bevorzugt nachfolgende Formel **19:** 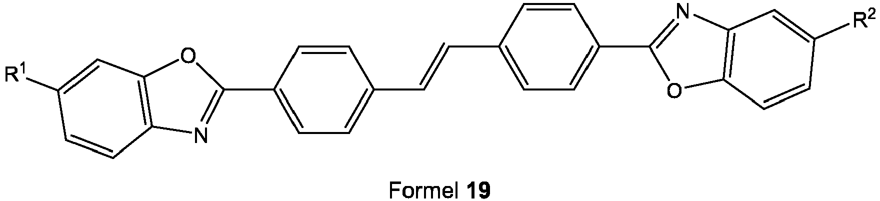 wobei
- R¹ = R² = H bedeuten.

In weiterer Ausgestaltung der Erfindung handelt es sich bei dem mindestens einen Fluoreszenzfarbstoff um eine Stilben-Verbindung.

Unter dem Ausdruck "Stilben-Verbindung" soll im Sinne der vorliegenden Erfindung ein Fluoreszenzfarbstoff mit mindestens einer 1,2-Diphenylethenstruktur, insbesondere nur einer 1,2-Diphenylethenstruktur oder mehreren 1,2-Diphenylethenstrukturen, verstanden werden.

Bevorzugt handelt es sich bei dem mindestens einen Fluoreszenzfarbstoff, insbesondere der Stilbenverbindung, um eine Sulfonsäuregruppen und/oder Sulfonatgruppen aufweisende oder tragende Stilben-Verbindung. Insbesondere bevorzugt trägt die Stilbenverbindung mindestens zwei, insbesondere zwei, vier oder sechs, Sulfonsäuregruppen und/oder Sulfonatgruppen. Durch die Sulfonsäuregruppen und/oder Sulfonatgruppen ist vorteilhafterweise eine ausreichende Löslichkeit in einem etwaigen zur Herstellung der Primer-Zusammensetzung verwendeten Lösungsmittel, vorzugsweise Alkohol, erzielbar.

Vorzugsweise handelt es sich bei dem mindestens einen Fluoreszenzfarbstoff, insbesondere der Stilben-Verbindung, um ein Triazinyl-Derivat von 4,4'-Diamino-2,2'-stilbendisulfonsäure.

Besonders bevorzugt handelt es sich bei dem mindestens einen Fluoreszenzfarbstoff um eine Stilbenverbindung, die sechs Sulfonsäuregruppen und/oder Sulfonatgruppen aufweist oder trägt. Dadurch lässt sich eine besonders gute Löslichkeit in einem etwaigen zur Herstellung der Primer-Zusammensetzung verwendeten Lösungsmittel, vorzugsweise Alkohol, erzielen. Entsprechende Fluoreszenzfarbstoffe sind beispielsweise unter den Bezeichnungen Blankophor PSK, Blankophor FCD, Blankophor UW sowie Blankophor TP 6000 Series kommerziell erhältlich.

In weiterer Ausgestaltung der Erfindung besitzt der mindestens eine Fluoreszenzfarbstoff, insbesondere die Stilben-Verbindung, nachfolgende Formel **20:** 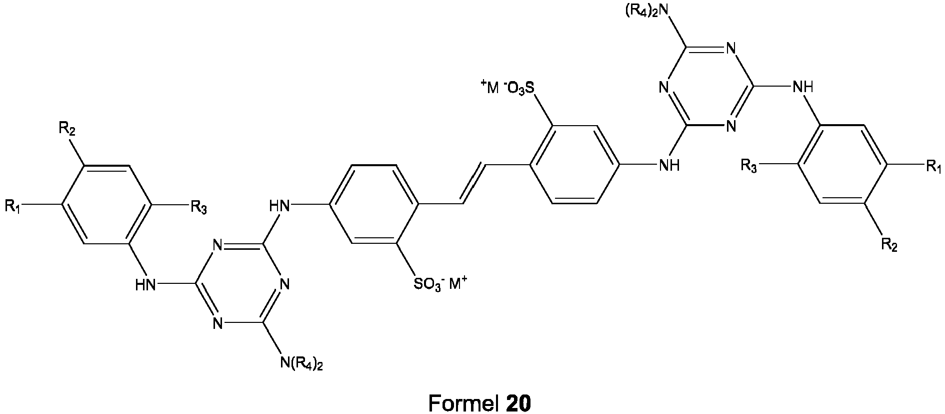 wobei
- R₁ = H, SO₃H oder SO₃ ⁻ M⁺ ist,
- R₂ = H, CH₃ (Methyl), SO₃H oder SO₃ ⁻ M⁺, vorzugsweise CH₃, ist,
- R₃ = H, SO₃H oder SO₃ ⁻ M⁺ ist,
- R₄ = CH₂CH₃ oder CH₂CH₂OH ist und
- M⁺ = Na⁺, K⁺, NH₄* oder eine substituierte, insbesondere alkylierte, Ammoniumgruppe ist.

In weiterer Ausgestaltung der Erfindung besitzt der mindestens eine Fluoreszenzfarbstoff, insbesondere die Stilben-Verbindung, nachfolgende Formel **21:** 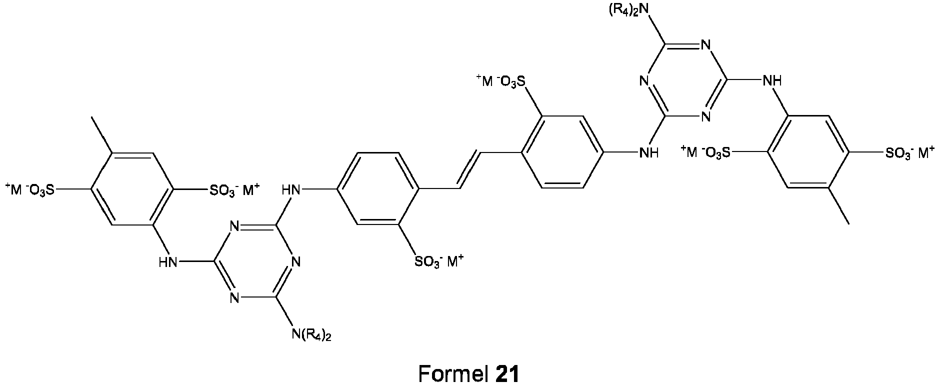 wobei
- R₄ = CH₂CH₃ oder CH₂CH₂OH ist und
- M⁺ = Na⁺, K⁺, NH₄* oder eine substituierte, insbesondere alkylierte, Ammoniumgruppe ist.

Vorzugsweise besitzt der mindestens eine Fluoreszenzfarbstoff, insbesondere die Stilben-Verbindung, nachfolgende Formel **22:**

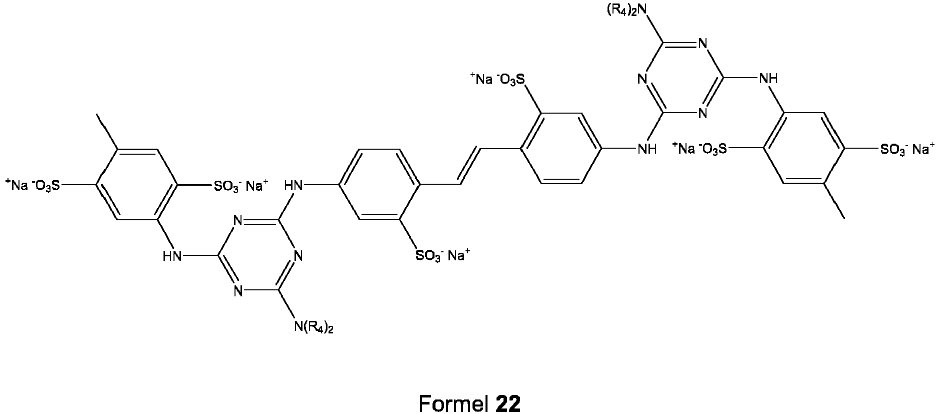

In weiterer Ausgestaltung der Erfindung ist der mindestens eine Fluoreszenzfarbstoff eine Seltenerdmetall-Verbindung, insbesondere eine Seltenerdmetall-Komplexverbindung. Die Seltenerdmetall-Komplexverbindung ist vorzugsweise ausgewählt aus der Gruppe bestehend aus Seltenerdmetall-Biketonat-Komplexverbindung, Seltenerdmetall-Acetonat-Komplexverbindung, Seltenerdmetall-Salicylat-Komplexverbindung und Mischungen von wenigstens zwei der vorgenannten Seltenerdmetall-Komplexverbindungen.

In weiterer Ausgestaltung der Erfindung ist das Seltenerdmetall ausgewählt aus der Gruppe bestehend aus Europium, Neodym, Samarium, Dysprosium und Terbium.

Bei der Seltenerdmetall-Komplexverbindung kann es sich insbesondere um eine Komplexverbindung handeln, die unter der Bezeichnung Lumilux Rot CD331, Lumilux Rot CD332, Lumilux Green CD333 oder Lumilux Gelb CD797 kommerziell erhältlich ist.

In weiterer Ausgestaltung der Erfindung ist die Seltenerdmetall-Komplexverbindung eine Europium-Biketonat-Komplexverbindung. Europium-Biketonat-Komplexverbindungen sind aufgrund ihrer ausreichenden Löslichkeit in vielen Lösungsmittel, insbesondere organischen Lösungsmitteln, besonders bevorzugt.

Der mindestens eine Fluoreszenzfarbstoff kann ferner einen Anteil von 0,001 Gew.-% bis 10 Gew.-%, insbesondere 0,01 Gew.-% bis 5 Gew.-%, vorzugsweise 0,01 Gew.-% bis 0,5 Gew.-%, aufweisen, bezogen auf das Gesamtgewicht der Primer-Zusammensetzung. Insbesondere bei den in diesem Absatz offenbarten Anteilen für den mindestens einen Fluoreszenzfarbstoff kommen die erfindungsgemäßen Vorteile besonders gut zur Geltung.

In weiterer Ausgestaltung der Erfindung besitzt das mindestens eine Organosilan nachfolgende Formel **23:**

(AcO)ₙ(R)₃₋ₙSi-L-R¹ Formel **23**

wobei
- n 1, 2 oder 3, vorzugsweise 3, ist,
- AcO ein Acetoxy-Rest ist,
- R ein Alkyl-Rest, insbesondere ein Methyl-Rest, ein Ethyl-Rest, ein n-Propyl-Rest oder ein Isopropyl-Rest, oder ein Alkoxy-Rest, insbesondere ein Methoxy-Rest, ein Ethoxy-Rest, ein n-Propoxy-Rest oder ein Isopropoxy-Rest, oder ein Aryloxy-Rest ist,
- Si Silizium ist,
- L ein divalenter linearer Kohlenwasserstoff-Rest oder ein divalenter verzweigter Kohlenwasserstoff-Rest ist und
- R¹ eine reaktive organische Gruppe, insbesondere ein Acrylatrest, ein Methacrylatrest, ein Vinylrest oder ein Allylrest, ist.

Bei dem mindestens einen Organosilan gemäß Formel **23** kommt eine Haftvermittlung dadurch zustande, dass durch Hydrolyse entstehende Silanol-Funktionen eine Verbindung, vorzugsweise kovalente Verbindung, mit einem Substrat, und die reaktive organische Gruppe R¹ eine Verbindung, vorzugsweise kovalente Verbindung, mit einer etwaigen nachfolgend aufgebrachten Beschichtung, insbesondere Tinten-Beschichtung, bewirken. Die Kupplung an die etwaige nachfolgend aufgebrachte Beschichtung beruht vorzugsweise auf radikalischen Polymerisations- und/oder Vernetzungsreaktionen zwischen der reaktiven organischen Gruppe R¹ des mindestens einen Organosilans und einer Reaktivkomponente der Beschichtung, beispielsweise einem Acrylat-Monomer und/oder Methacrylat-Monomer und/oder Acrylat-Oligomer und/oder Methacrylat-Oligomer.

Das mindestens eine Organosilan gemäß Formel **23** hat den Vorteil, dass mit ihm eine optimierte Nasshaftung realisierbar ist.

Bevorzugt ist der divalente Kohlenwasserstoff-Rest L in der Formel 23 ein Alkylen-Rest, ein Alkenylen-Rest, ein Alkinylen-Rest oder ein Arylen-Rest, insbesondere mit 1 bis 20 Kohlenstoffatomen, bevorzugt 1 bis 8 Kohlenstoffatomen, besonders bevorzugt 1 bis 3 Kohlenstoffatomen. Vorzugsweise handelt es sich bei dem divalenten Kohlenwasserstoff-Rest L um einen Alkylen-Rest, insbesondere linearen Alkylen-Rest, bevorzugt mit 1 bis 3 Kohlenstoffatomen. Beispielsweise kann es sich bei dem divalenten Kohlenwasserstoff-Rest L um einen Methylen-Rest (-(CH₂)-), einen Ethylen-Rest (-(CH₂)₂-) oder um einen n-Propylen-Rest (-(CH₂)₃-) handeln.

Bevorzugt handelt es sich bei dem mindestens einen Organosilan gemäß Formel **23** um 3-Acryloxypropyltriacetoxysilan und/oder 3-Methacryloxypropyltriacetoxysilan.

Ferner kann das mindestens eine Organosilan gemäß Formel **23** einen Anteil von 0,01 Gew.-% bis 15 Gew.-%, insbesondere 0,01 Gew.-% bis 5 Gew.-%, vorzugsweise 0,05 Gew.-% bis 3 Gew.-%, aufweisen, bezogen auf das Gesamtgewicht der Primer-Zusammensetzung. Insbesondere die in diesem Absatz offenbarten Anteile für das mindestens eine Organosilan gemäß Formel **23** haben sich unter haftvermittelnden Gesichtspunkten als besonders vorteilhaft herausgestellt.

In weiterer Ausgestaltung der Erfindung besitzt das mindestens eine Organosilan nachfolgende Formel **24:**

(R²O)ₙ(R)₃₋ₙSi-L-R¹ Formel **24**

wobei
- n 1, 2 oder 3, vorzugsweise 3, ist,
- R² ein Alkyl-Rest, insbesondere ein Methyl-Rest, ein Ethyl-Rest, ein n-Propyl-Rest oder ein Isopropyl-Rest, ist,
- O Sauerstoff ist,
- R ein Alkyl-Rest, insbesondere ein Methyl-Rest, ein Ethyl-Rest, ein n-Propyl-Rest oder ein Isopropyl-Rest, ist,
- Si Silizium ist,
- L ein divalenter linearer Kohlenwasserstoff-Rest oder ein divalenter verzweigter Kohlenwasserstoff-Rest ist und
- R¹ eine reaktive organische Gruppe, insbesondere ein Acrylatrest, ein Methacrylatrest, ein Vinylrest oder ein Allylrest, ist.

Das mindestens eine Organosilan gemäß Formel **24** hat den Vorteil, dass aufgrund seiner vergleichsweise geringeren Reaktivität das Risiko von Druckkopfbeschädigungen, insbesondere durch Verblockung und/oder Korrosion, reduziert und die Lebensdauer der Druckköpfe deutlich verlängert werden kann. Bezüglich der haftvermittelnden Wirkung des mindestens einen Organosilans gemäß Formel **24** wird auf die entsprechenden Ausführungen zu dem mindestens einen Organosilan gemäß Formel **23** Bezug genommen, die sinngemäß gelten.

Bevorzugt ist der divalente Kohlenwasserstoff-Rest L in der Formel **24** ein Alkylen-Rest, ein Alkenylen-Rest, ein Alkinylen-Rest oder ein Arylen-Rest, insbesondere mit 1 bis 20 Kohlenstoffatomen, bevorzugt 1 bis 8 Kohlenstoffatomen, besonders bevorzugt 1 bis 3 Kohlenstoffatomen. Vorzugsweise handelt es sich bei dem divalenten Kohlenwasserstoff-Rest L um einen Alkylen-Rest, insbesondere linearen Alkylen-Rest, bevorzugt mit 1 bis 3 Kohlenstoffatomen. Beispielsweise kann es sich bei dem divalenten Kohlenwasserstoff-Rest L um einen Methylen-Rest (-(CH₂)-), einen Ethylen-Rest (-(CH₂)₂-) oder um einen n-Propylen-Rest (-(CH₂)₃-) handeln.

Bevorzugt handelt es sich bei dem mindestens einen Organosilan gemäß Formel **24** um 3-Acryloxypropyltrimethoxysilan und/oder 3-Methacryloxypropyltrimethoxysilan.

Ferner kann das mindestens eine Organosilan gemäß Formel **24** einen Anteil von 0,01 Gew.-% bis 15 Gew.-%, insbesondere 0,01 Gew.-% bis 5 Gew.-%, vorzugsweise 0,05 Gew.-% bis 3 Gew.-%, aufweisen, bezogen auf das Gesamtgewicht der Primer-Zusammensetzung. Insbesondere die in diesem Absatz offenbarten Anteile für das mindestens eine Organosilan gemäß Formel **24** haben sich unter haftvermittelnden Gesichtspunkten als besonders vorteilhaft herausgestellt.

Bei dem mindestens einen Organosilan gemäß der vorliegenden Erfindung kann es sich ferner insbesondere um eine Kombination oder Mischung mindestens eines Organosilans gemäß Formel **23** und mindestens eines Organosilans gemäß Formel **24** handeln. Dadurch können die im Zusammenhang dieser beiden Organosilantypen genannten Vorteile kumulativ realisiert werden.

Bevorzugt weist die Primer-Zusammensetzung ferner mindestens ein durch UV-Strahlung polymerisierbares Monomer und/oder mindestens ein durch Elektronenstrahlung polymerisierbares Monomer auf. Das mindestens eine durch UV-Strahlung polymerisierbare Monomer und/oder das mindestens eine durch Elektronenstrahlung polymerisierbare Monomer können/kann ausgewählt sein aus der Gruppe bestehend aus 3,3,5-Trimethylcyclohexylacrylat, 2-(1,1-Dimethylethyl)cyclohexylacrylat, 3-(1,1-Dimethylethyl)cyclohexylacrylat, 4-(1,1-Dimethylethyl)cyclohexylacrylat, 4-tert.-Butyl-cyclohexylacrylat, 2-Phenoxyethylacrylat, 4-tert.-Butylcyclohexylmethacrylat, Cyclohexylmethacrylat, 3,3,5-Trimethylcyclohexylmethacrylat , N-Vinylimidazol, Vinyl-Methyl-Oxazolidinon (5-Methyl-3-vinyl-2-oxazolidinon), Vinylpyrrolidon (N-Vinyl-2-pyrrolidon), N-Vinylcaprolactam (1-Vinylhexahydro-2*H*-azepin-2-on), N-Vinyl-2-Piperidon, (N-Vinyl-δ-valerolactam), Isobornylacrylat, (Octahydro-4,7-methano-1H-indendiyl)bis(methylen)diacrylat, Tricyclodecandimethanoldiacrylat, Butandioldiacrylat, 1,2-Ethylenglykoldiacrylat, 1,12-Dodecanoldiacrylat, 1,10-Decandioldiacrylat, Esterdioldiacrylat, propoxyliertes 2-Neopentylglycoldiacrylat, Tris-(2-Hydroxyethyl)-isocyanurattriacrylat, propoxyliertes Neopentylglykoldiacrylat, Hexandioldiacrylat, Tripropylenglykol-diacrylat, Tetraethylenglycoldiacrylat, Dipropylenglykoldiacrylat, ethoxyliertes Bisphenol A-diacrylat, alkoxyliertes Hexandioldiacrylat, 3-Methyl-1,5-pentandioldiacrylat, alkoxyliertes Cyclohexandimethanoldiacrylat, Tricyclodecandimethanoldiacrylat, Trimethylolpropan-triacrylat, alkoxyliertes Trimethylolpropantriacrylat, ethoxyliertes Trimethylolpropantriacrylat, Glycerolpropoxylattriacrylat, Pentaerythritoltriacrylat, Dipentaerythritolpentaacrylat, Dipentaerythritolhexaacrylat, ethoxyliertes Pentaerythritoltetraacrylat, Pentaerythritoltetraacrylat, Ditrimethylolpropantetraacrylat, Polyethylenglycoldiacrylate, 1, 1 2-Dodecanoldimethacrylat, Hexandioldimethacrylat, ethoxyliertes Bisphenol A-dimethacrylat, Trimethylolpropantrimethacrylat, Pentaerythritoltetramethacrylat und Mischungen von wenigstens zwei der vorgenannten Monomere.

Weiter kann die Primer-Zusammensetzung frei von einem siliziumfreien Acrylatmonomer und/oder frei von einem siliziumfreien Methacrylatmonomer sein.

Weiter kann die Primer-Zusammensetzung, abgesehen von dem mindestens einen Organosilan gemäß Formel **23,** wobei R¹ ein Acrylatrest ist, und/oder dem mindestens einen Organosilan gemäß Formel **24,** wobei R¹ ein Acrylatrest ist, kein weiteres Acrylatmonomer aufweisen.

Weiter kann die Primer-Zusammensetzung, abgesehen von dem mindestens einen Organosilan gemäß Formel **23,** wobei R¹ ein Methacrylatrest ist, und/oder dem mindestens einen Organosilan gemäß Formel **24,** wobei R¹ ein Methacrylatrest ist, kein weiteres Methacrylatmonomer aufweisen.

Weiter kann ist die Primer-Zusammensetzung frei von einem Acrylatoligomer und/oder frei von einem Methacrylatoligomer sein.

Unter dem Ausdruck "Acrylatmonomer" soll im Sinne der vorliegenden Erfindung ein Monomer mit mindestens einer Acrylgruppe, insbesondere einer Acrylgruppe oder einer Vielzahl von Acrylgruppen, d.h. zwei oder mehr Acrylgruppen, verstanden werden.

Unter dem Ausdruck "Methacrylatmonomer" soll im Sinne der vorliegenden Erfindung ein Monomer mit mindestens einer Methacrylgruppe, insbesondere einer Methacrylgruppe oder einer Vielzahl von Methacrylgruppen, d.h. zwei oder mehr Methacrylgruppen, verstanden werden.

Unter dem Ausdruck "Acrylatoligomer" soll im Sinne der vorliegenden Erfindung ein Oligomer mit mindestens einer Acrylgruppe, insbesondere einer Acrylgruppe oder einer Vielzahl von Acrylgruppen, d.h. zwei oder mehr Acrylgruppen, verstanden werden.

Unter dem Ausdruck "Methacrylatoligomer" soll im Sinne der vorliegenden Erfindung ein Oligomer mit mindestens einer Methacrylgruppe, insbesondere einer Methacrylgruppe oder einer Vielzahl von Methacrylgruppen, d.h. zwei oder mehr Methacrylgruppen, verstanden werden.

Die Primer-Zusammensetzung weist erfindungsgemäß mindestens einen Alkohol auf. Bevorzugt weist der mindestens eine Alkohol eine Kohlenstoffkette mit 1 bis 4 Kohlenstoffatomen auf (sogenannte niedere Alkohole). Der mindestens eine Alkohol kann insbesondere ausgewählt sein aus der Gruppe bestehend aus Ethanol, Isopropanol, Butanol und Mischungen von wenigstens zwei der vorgenannten Alkohole. Die vorliegende Erfindung beruht auf der (weiteren) überraschenden Erkenntnis, dass sich eine Primer-Zusammensetzung mit einem Organosilan, insbesondere gemäß Formel **23** und/oder **24,** und einem Alkohol als organisches Lösungsmittel in Druckverfahren, insbesondere Digitaldruckverfahren, bevorzugt Tintenstrahldruckverfahren, zuverlässig, insbesondere unter ausreichender Tropfenbildung, und problemlos, insbesondere ohne Druckkopfbeschädigungen und Düsenausfälle, verarbeiten lässt. Diese Erkenntnis ist umso überraschender, als dass für eine verlässliche Funktion eines Druckkopfes, insbesondere Tintenstrahldruckkopfes, eine Vielzahl von (anderen) Parametern, insbesondere die Tintenviskosität bei Arbeitstemperatur, die Materialverträglichkeit von Tinte/Druckkopf, das Eintrocknungsverhalten der Tinte sowie ihre maximale Teilchengröße, wichtig sind.

Die Erfinder konnten insbesondere nachweisen, dass die Viskosität einer solchen Primer-Zusammensetzung - entgegen der vorherrschenden Meinung - auch für Druckverfahren, insbesondere Digitaldruckverfahren, bevorzugt Tintenstrahldruckverfahren, ausreichend ist, und sich die Primer-Zusammensetzung daher entsprechend verdrucken lässt. Ferner konnten die Erfinder zeigen, dass die Verwendung einer alkoholischen Primer-Zusammensetzung zu keinem Eintrocknen und mithin zu keiner Verstopfung von Druckköpfen führte. Auch insoweit haben die Erfinder daher ein fachmännisches Vorurteil überwunden, laut dem Druckköpfe aufgrund der hohen Flüchtigkeit von insbesondere niederen Alkoholen rasch eintrocknen und verstopfen. Das Druckverfahren, insbesondere Digitaldruckverfahren, bevorzugt Tintenstrahldruckverfahren, hat gegenüber dem Sprühverfahren den Vorteil, dass auch ein selektiver Auftrag der Primer-Zusammensetzung möglich ist. Dadurch ist vorteilhafterweise sowohl eine Reduktion der Menge an eingesetzter Primer-Zusammensetzung als auch eine Reduktion der sogenannten VOC-Emission, d.h. der Emission von flüchtigen organischen Verbindungen (volatile organic compounds), erzielbar. Dies wiederum ist sowohl unter wirtschaftlichen als auch ökologischen Gesichtspunkten vorteilhaft.

Der mindestens eine Alkohol kann einen Anteil von 40 Gew.-% bis 99 Gew.-%, insbesondere 60 Gew.-% bis 99 Gew.-%, bevorzugt 80 Gew.-% bis 99 Gew.-%, aufweisen, bezogen auf das Gesamtgewicht der Primer-Zusammensetzung.

Vorzugsweise weist der mindestens eine Alkohol einen Anteil von mindestens 90 Gew.-%, insbesondere 90 Gew.-% bis 99 Gew.-%, auf, bezogen auf das Gesamtgewicht der Primer-Zusammensetzung.

Alternativ oder in Kombination kann die Primer-Zusammensetzung als organisches Lösungsmittel ferner mindestens einen Ester und/oder mindestens ein Keton aufweisen. Der mindestens eine Ester kann beispielsweise ausgewählt sein aus der Gruppe bestehend aus 1-Methoxyisopropylacetat, 2-Butoxyethylacetat, 2-Ethylbutylacetat, 1-Butylacetat, 1-Hexylacetat, 1,3-Dimethylbutylacetat, 2-(2-Butoxyethoxyethylacetat), 2-Butanolacetat, 2-Butoxyethylacetat, 2-Ethoxyethylacetat, 2-Ethylbutylacetat, 3-Methoxy-N-butylacetat und Mischungen von wenigstens zwei der vorgenannten Ester. Das mindestens eine Keton kann beispielsweise ausgewählt sein aus der Gruppe bestehend aus 2-Butanon, 2-Methylcyclohexanon, 2-Propanon, 2,6-Dimethylheptan-4-on, 3-Methylbutanon, 3,5,5-Trimethyl-2-cyclohexen-1-on, 3,5,5-Trimethylcyclohex-2-enon, 4-Hydroxybuttersäurelacton, 4-Methyl-2-pentanon, 4-Methylpentan-2-on, 5-Methyl-3-heptanon, Aceton, Amylethylketon, Anon, Butan-2-on, Butanon, Cyclohexanon, Diethylketon, Diisobutylketon, Dimethylketon, Ethylamylketon, Ethylisoamylketon, Ethylmethylketon, Methylaceton, Methylethylketon und Mischungen von wenigstens zwei der vorgenannten Ketone.

Die Primer-Zusammensetzung kann ferner bei einer Temperatur von 20 °C eine Viskosität von 0,1 mPas bis 50 mPas, insbesondere 0,5 mPas bis 25 mPas, vorzugsweise 0,5 mPas bis 5 mPas, aufweisen.

Ferner kann die Primer-Zusammensetzung, insbesondere bei einer Temperatur von 24 °C, eine Oberflächenspannung von 18 mN/m bis 30 mN/m, insbesondere 18 mN/m bis 25 mN/m, vorzugsweise 20 mN/m bis 25 mN/m, aufweisen.

Bevorzugt weist die Primer-Zusammensetzung ferner mindestens eine Säure, insbesondere mindestens eine organische Säure, vorzugsweise ausgewählt aus der Gruppe bestehend aus Essigsäure, Zitronensäure, Ascorbinsäure und Mischungen von wenigstens zwei der vorgenannten Säuren, auf.

Die Säure kann einen Anteil von 0,01 Gew.-% bis 5 Gew.-%, insbesondere 0,05 Gew.-% bis 2 Gew.-%, bevorzugt 0,1 Gew.-% bis 1 Gew.-%, aufweisen, bezogen auf das Gesamtgewicht der Primer-Zusammensetzung.

Vorzugsweise weist die Primer-Zusammensetzung einen pH-Wert von 2 bis 8, insbesondere 3 bis 7, auf. Dadurch können mit besonderem Vorteil die haftvermittelnden Eigenschaften des mindestens einen Organosilans zusätzlich erhöht werden.

Ferner kann es bevorzugt sein, dass die Primer-Zusammensetzung aus dem mindestens einen Fluoreszenzfarbstoff, dem mindestens einen Organosilan und optional mindestens einem weiteren Bestandteil, ausgewählt aus der Gruppe bestehend aus mindestens einen Alkohol, Wasser, mindestens eine Säure und Kombinationen von wenigstens zwei der vorgenannten weiteren Bestandteile, besteht, wobei der mindestens eine Alkohol erfindungsgemäß enthalten sein muss. Bezüglich weiterer Merkmale und Vorteile des mindestens einen Alkohols sowie der mindestens einen Säure wird vollständig auf die bisherige Beschreibung Bezug genommen. Die dort insoweit beschriebenen Merkmale und Vorteile gelten sinngemäß. Gemäß einem zweiten Aspekt betrifft die Erfindung ein Verfahren zum Beschichten, insbesondere Bedrucken, bevorzugt Digitalbedrucken, besonders bevorzugt Tintenstrahlbedrucken, eines Substrats, wobei
- eine Primer-Zusammensetzung gemäß erstem Erfindungsaspekt auf mindestens einen Teil einer Oberfläche des Substrats in Form einer Primer-Schicht aufgebracht wird und
- der mindestens eine Fluoreszenzfarbstoff der Primer-Zusammensetzung bzw. der Primer-Schicht zum Fluoreszieren angeregt wird.

Die Primer-Zusammensetzung kann grundsätzlich nur teilweise, insbesondere nur selektiv, oder vollständig, d.h. vollflächig, auf das Substrat aufgebracht werden.

Besonders bevorzugt wird die Primer-Zusammensetzung auf das Substrat in einem Digitaldruckverfahren, insbesondere einem Tintenstrahldruckverfahren, aufgebracht. Bevorzugt wird auf mindestens einen Teil der aufgebrachten Primer-Zusammensetzung bzw. Primer-Schicht eine weitere Beschichtung aufgebracht. Vorzugsweise wird für die weitere Beschichtung eine Tinte, insbesondere eine UV-härtbare Tinte, eingesetzt.

Weiter bevorzugt wird die weitere Beschichtung in einem Digitaldruckverfahren, insbesondere einem Tintenstrahldruckverfahren, aufgebracht.

Unter dem Ausdruck "Digitaldruckverfahren" soll im Sinne der vorliegenden Erfindung ein Druckverfahren verstanden werden, bei welchem das Druckbild direkt von einem Computer in eine Druckmaschine übertragen wird, ohne dass eine statische oder feste Druckform benutzt wird.

Unter dem Ausdruck "Tintenstrahldruckverfahren" soll im Sinne der vorliegenden Erfindung ein Verfahren verstanden werden, bei welchem kleine Tröpfchen flüssiger Tinte erzeugt und auf ein Substrat, insbesondere Glassubstrat, aufgebracht werden. Dabei gibt es zum einen die Möglichkeit, einen kontinuierlichen Tintenstrahl zu erzeugen (Continuous Inkjet CIJ) oder zum anderen die Möglichkeit der diskontinuierlichen Erzeugung einzelner Tropfen, welche nur bei Bedarf erzeugt und auf das Substrat übertragen werden (Drop-On-Demand, DOD).

Ferner kann das Substrat, vorzugsweise zur Änderung seiner Oberflächeneigenschaften, vorbehandelt werden. Beispielsweise kann im Fall eines Substrats aus Glas eine Vorbehandlung durch Beflammen und/oder flammenpyrolytisches Beschichten, insbesondere Silikatisieren, erfolgen.

Bezüglich weiterer Merkmale und Vorteile des Verfahrens wird zur Vermeidung von Wiederholungen vollständig auf die im Rahmen des ersten Erfindungsaspekts gemachten Ausführungen Bezug genommen. Die dort insbesondere in Bezug auf das Substrat sowie die Primer-Zusammensetzung beschriebenen Merkmale und Vorteile gelten sinngemäß auch für das Verfahren gemäß zweitem Erfindungsaspekt.

Gemäß einem dritten Aspekt betrifft die Erfindung ein Substrat, welches mindestens teilweise, insbesondere nur teilweise oder vollständig, d.h. vollflächig, mit einer Primer-Zusammensetzung gemäß erstem Erfindungsaspekt beschichtet, insbesondere bedruckt, bevorzugt digitalbedruckt, besonders bevorzugt tintenstrahlbedruckt, ist.

Bezüglich weiterer Merkmale und Vorteile des Substrats wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf das Substrat sowie die Primer-Zusammensetzung beschriebenen Merkmale und Vorteile gelten sinngemäß auch für das Substrat gemäß drittem Erfindungsaspekt.

Gemäß einem vierten, nicht beanspruchten Aspekt betrifft die Erfindung die Verwendung einer Primer-Zusammensetzung gemäß erstem Erfindungsaspekt zum Beschichten, insbesondere Bedrucken, bevorzugt Digitalbedrucken, besonders bevorzugt Tintenstrahlbedrucken, eines Substrats.

Bezüglich weiterer Merkmale und Vorteile der Primer-Zusammensetzung sowie des Substrats wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die Primer-Zusammensetzung sowie das Substrat beschriebenen Merkmale und Vorteile gelten sinngemäß auch für die Verwendung gemäß viertem Erfindungsaspekt.

Gemäß einem fünften, nicht beanspruchten Aspekt betrifft die Erfindung ein Kit zum Beschichten, insbesondere Bedrucken, bevorzugt Digitalbedrucken, besonders bevorzugt Tintenstrahlbedrucken, eines Substrats.

Das Kit weist räumlich voneinander getrennt
- eine Primer-Zusammensetzung gemäß erstem Erfindungsaspekt und
- wenigstens eine weitere Komponente auf.

Die wenigstens eine weitere Komponente ist vorzugsweise ausgewählt aus der Gruppe bestehend aus UV-Lampe, UV-LED-Lampe, LED-UV-Trocknereinheit, Digitaldruckkopf, Digitaldruckanlage, Tinten-Zusammensetzung und Kombinationen von mindestens zwei der vorgenannten weiteren Komponenten.

Bei der UV-Lampe kann es sich beispielsweise um einen Quecksilberstrahler handeln.

Bei dem Digitaldruckkopf handelt es sich vorzugsweise um einen Tintenstrahldruckkopf.

Bei der Digitaldruckanlage handelt es sich vorzugsweise um eine Tintenstrahldruckanlage.

Bei der Tinten-Zusammensetzung kann es sich um eine bunte Tinten-Zusammensetzung, beispielsweise ausgewählt aus der Gruppe bestehend aus gelbe Tinten-Zusammensetzung, orangene Tinten-Zusammensetzung, rote Tinten-Zusammensetzung, magentafarbene Tinten-Zusammensetzung, violette Tinten-Zusammensetzung, grüne Tinten-Zusammensetzung, cyanfarbene Tinten-Zusammensetzung, blaue Tinten-Zusammensetzung, braune Tinten-Zusammensetzung und Kombinationen von mindestens zwei der vorgenannten bunten Tinten-Zusammensetzungen, oder um eine unbunte Tinten-Zusammensetzung, beispielsweise ausgewählt aus der Gruppe bestehend aus graue Tinten-Zusammensetzung, schwarze Tinten-Zusammensetzung, silberfarbene Tinten-Zusammensetzung und Kombinationen von mindestens zwei der vorgenannten unbunten Tinten-Zusammensetzungen, oder um eine farblose Tinten-Zusammensetzung (sogenannter Lack) handeln.

Bezüglich weiterer Merkmale und Vorteile des Kits wird zur Vermeidung von Wiederholungen ebenfalls vollständig auf die bisherige Beschreibung, insbesondere auf die im Rahmen des ersten Erfindungsaspekts gemachten Ausführungen, Bezug genommen. Die dort insbesondere in Bezug auf die Primer-Zusammensetzung sowie das Substrat beschriebenen Merkmale und Vorteile gelten sinngemäß auch für das Kit gemäß fünftem Erfindungsaspekt.

Gemäß einem sechsten Aspekt betrifft die Erfindung ein Verfahren zum Bedrucken, bevorzugt Digitalbedrucken, besonders bevorzugt Tintenstrahlbedrucken, eines Substrats,
- wobei eine Oberfläche des Substrats mindestens teilweise, insbesondere nur teilweise oder vollständig, d.h. vollflächig, mit einer Primer-Zusammensetzung, aufweisend mindestens einen Alkohol und mindestens ein Organosilan bedruckt, bevorzugt digitalbedruckt, besonders bevorzugt tintenstrahlbedruckt, wird,
- wobei das mindestens eine Organosilan die nachfolgende Formel **23** aufweist:

   (AcO)ₙ(R)₃₋ₙSi-L-R¹ Formel **23**

   wobei
   - n 1, 2 oder 3, vorzugsweise 3, ist,
   - AcO ein Acetoxy-Rest ist,
   - R ein Alkyl-Rest, insbesondere ein Methyl-Rest, ein Ethyl-Rest, ein n-Propyl-Rest oder ein Isopropyl-Rest, oder ein Alkoxy-Rest, insbesondere ein Methoxy-Rest, ein Ethoxy-Rest, ein n-Propoxy-Rest oder ein Isopropoxy-Rest, oder ein Aryloxy-Rest ist,
   - Si Silizium ist,
   - L ein divalenter linearer Kohlenwasserstoff-Rest oder ein divalenter verzweigter Kohlenwasserstoff-Rest ist und
   - R¹ eine reaktive organische Gruppe, insbesondere ein Acrylatrest, ein Methacrylatrest, ein Vinylrest oder ein Allylrest, ist,
   und/oder
- wobei das mindestens eine Organosilan die nachfolgende Formel **24** aufweist:

   (R²O)ₙ(R)₃₋ₙSi-L-R¹ Formel **24**

   wobei
   - n 1, 2 oder 3, vorzugsweise 3, ist,
   - R² ein Alkyl-Rest, insbesondere ein Methyl-Rest, ein Ethyl-Rest, ein n-Propyl-Rest oder ein Isopropyl-Rest, ist,
   - O Sauerstoff ist,
   - R ein Alkyl-Rest, insbesondere ein Methyl-Rest, ein Ethyl-Rest, ein n-Propyl-Rest oder ein Isopropyl-Rest, ist,
   - Si Silizium ist,
   - L ein divalenter linearer Kohlenwasserstoff-Rest oder ein divalenter verzweigter Kohlenwasserstoff-Rest ist, und
   - R¹ eine reaktive organische Gruppe, insbesondere ein Acrylatrest, ein Methacrylatrest, ein Vinylrest oder ein Allylrest, ist.

Überraschenderweise hat sich herausgestellt, dass sich alkoholische Primer-Zusammensetzungen trotz ihrer geringen Viskositäten und entgegen der fachmännischen Meinung gleichwohl für Druckverfahren, bevorzugt Digitaldruckverfahren, besonders bevorzugt Tintenstrahldruckverfahren, eignen. Dadurch ist mit besonderem Vorteil ein nur teilweise, insbesondere selektives, Aufbringen der Primer-Zusammensetzung auf die Substratoberfläche erzielbar. Dadurch können wiederum der Verbrauch an Primer-Zusammensetzung reduziert und durch einen entsprechend geringeren Verbrauch an Alkohol auch die sogenannten VOC-Emissionen (Emissionen von volatilen organischen Verbindungen (volatile organic compounds) sowie hiermit einhergehende Kosten gesenkt werden.

Ein weiterer Vorteil besteht darin, dass sich die Primer-Zusammensetzung im Rahmen des Verfahrens zuverlässig und problemlos verdrucken lässt und insbesondere die Standzeiten von Druckköpfen nicht negativ beeinflusst.

Die Primer-Zusammensetzung kann ferner mindestens einen Fluoreszenzfarbstoff aufweisen. Bezüglich weiterer Merkmale und Vorteile des mindestens einen Fluoreszenzfarbstoffs wird vollständig auf die bisherige Beschreibung, insbesondere auf die im Rahmen des ersten Erfindungsaspekts gemachten Ausführungen, Bezug genommen. Die dort in Bezug auf den mindestens einen Fluoreszenzfarbstoff beschriebenen Merkmale und Vorteile gelten sinngemäß.

Bezüglich weiterer Merkmale und Vorteile des Verfahrens wird zur Vermeidung von Wiederholungen vollständig auf die bisherige Beschreibung, insbesondere auf die im Rahmen des ersten und zweiten Erfindungsaspekts gemachten Ausführungen, Bezug genommen. Die dort insbesondere in Bezug auf die Primer-Zusammensetzung, den mindestens einen Alkohol, das mindestens eine Organosilan gemäß Formel 31, das mindestens eine Organosilan gemäß Formel 32 sowie das Substrat beschriebenen Merkmale und Vorteile gelten sinngemäß auch für das Verfahren gemäß sechstem Erfindungsaspekt.

Weitere Merkmale und Vorteile der Erfindung ergeben sich aus der nachfolgenden Beschreibung von bevorzugten Ausführungsformen in Form von Beispielen. Dabei können einzelne Merkmale jeweils für sich alleine oder in Kombination miteinander verwirklicht sein. Die nachfolgend beschriebenen Beispiele dienen lediglich der weiteren Erläuterung der Erfindung, ohne die Erfindung auf den Offenbarungsgehalt der Beispiele zu beschränken.

### BEISPIELTEIL

### 1. Rezepturen

Die unten stehende **Rezeptur 1** gibt die Bestandteile einer Ausführungsform einer erfindungsgemäßen Primer-Zusammensetzung wieder:

### Rezeptur 1:

| | | | |
|---|---|---|---|
| Ethanol 99%: | 92,4 % | Lösungsmittel | |
| Essigsäure 2,9% | 7,0 % | | Säure |
| 3-Acryloxypropyl-trimethoxysilan | 0,5 % | | Organosilan |
| Blankophor PSK liquid | 0,1 % | | Fluoreszenzfarbstoff (Stilben-Derivat) |

Die unten stehende **Rezeptur 2** gibt die Bestandteile einer Ausführungsform einer weiteren erfindungsgemäßen Primer-Zusammensetzung wieder:

### Rezeptur 2:

| | | |
|---|---|---|
| Isopropanol 99%: | 92,3 % | Lösungsmittel |
| Essigsäure 2,9% | 7,0 % | Säure |
| 3-Acryloxypropyl-trimethoxysilan | 0,5 % | Organosilan |
| Lumilux Rot CD322 | 0,2% | Fluoreszenzfarbstoff (Eu-Komplex) |

Die untenstehende **Rezeptur 3** gibt die Bestandteile einer Primer-Zusammensetzung ohne Fluoreszenzfarbstoff wieder:

### Rezeptur 3:

| | | |
|---|---|---|
| ETHANOL 99%: | 92,5 % | Lösungsmittel |
| ESSIGSÄURE 2,9% | 7,0 % | Säure |
| 3-Acryloxypropyl-trimethoxysilan | 0,5 % | Organosilan |

Die untenstehende **Rezeptur 4** gibt die Bestandteile einer weiteren Primer-Zusammensetzung wieder:

### Rezeptur 4:

| | | | | |
|---|---|---|---|---|
| Isopropanol 99% | 92,0 % | | Lösungsmittel | |
| Essigsäure 2,9% | 7,0 % | | Säure | |
| 3-Methacryloxypropyl-triacetoxysilan | | 1,0 % | | Organosilan |

### 2. Versuchsbeschreibungen.

1.) Mit einem Druckkopf KM 1024iMHE des Herstellers Konica-Minolta wurde eine Primer-Zusammensetzung gemäß Rezeptur 2 verdruckt. Die Druckbedingungen waren wie folgt:
   Temperatur: 23°C
   Kopfspannung: 85 % der Nominalwerte
   Meniskus Vakuum: -5 mbar
   Tropfenbildungsfrequenz: 10 KHz
   Graustufe: 3 dpd
   Modus: Single Pass 360 dpi
   Testbild: Vollfläche mit 20% Lücken
   Auswertung: Nach jeweils 10000 gedruckten Exemplaren wurde mit farbiger Tinte ein Düsentest durchgeführt.
   Ergebnis: Weder im Dauerbetrieb noch nach 30000 Drucken insgesamt konnten ausgefallene Düsen festgestellt werden.
2.) Mit einem Druckkopf 1003 6pl des Herstellers Xaar wurde eine Primer-Zusammensetzung gemäß Rezeptur 1 verdruckt. Die Druckbedingungen waren wie folgt:
   Temperatur: 25°C
   Kopfspannung: 100 % des Nominalwertes
   Meniskus Vakuum: -8 mbar
   Tropfenbildungsfrequenz: 5 KHz
   Graustufe: 4 dpd
   Modus: Single Pass 360 dpi
   Testbild: Vollfläche 30 x 7 cm, Pause zwischen den Drucken: 3 Sekunden
   Auswertung: Nach 100000 gedruckten Exemplaren wurde mit farbiger Tinte ein Düsentest durchgeführt.
   Ergebnis: Weder im Dauerbestrieb noch nach 100000 Drucken konnten ausgefallene Düsen festgestellt werden.
   Bei Belichtung mit einer handelsüblichen UV-Lampe der Wellenlänge 395 nm (sog. Geldscheinprüfer) konnte die Vollständigkeit der gedruckten Schicht geprüft werden.

## Patentansprüche

1. Primer-Zusammensetzung zum Beschichten, insbesondere Bedrucken, eines Substrats, wobei die Primer-Zusammensetzung mindestens einen Fluoreszenzfarbstoff und mindestens ein Organosilan aufweist, **dadurch gekennzeichnet, dass** die Primer-Zusammensetzung ferner mindestens einen Alkohol aufweist und das mindestens eine Organosilan nachfolgende Formel 23 und/oder nachfolgende Formel 24 besitzt:
(AcO)n(R)3-nSi-L-R1 Formel **23**
wobei
- n 1, 2 oder 3, vorzugsweise 3, ist,
- AcO ein Acetoxy-Rest ist,
- R ein Alkyl-Rest, insbesondere ein Methyl-Rest, ein Ethyl-Rest, ein n-Propyl-Rest oder ein Isopropyl-Rest, oder ein Alkoxy-Rest, insbesondere ein Methoxy-Rest, ein Ethoxy-Rest, ein n-Propoxy-Rest oder ein Isopropoxy-Rest, oder ein Aryloxy-Rest ist,
- Si Silizium ist,
- L ein divalenter linearer oder ein divalenter verzweigter Kohlenwasserstoff-Rest ist, und
- R¹ eine reaktive organische Gruppe, insbesondere ein Acrylatrest, ein Methacrylatrest, ein Vinylrest oder ein Allylrest, ist,
(R²O)ₙ(R)₃₋ₙSi-L-R¹ Formel **24**
wobei
- n 1, 2 oder 3, vorzugsweise 3, ist,
- R² ein Alkyl-Rest, insbesondere ein Methyl-Rest, ein Ethyl-Rest, ein n-Propyl-Rest oder ein Isopropyl-Rest, ist,
- O Sauerstoff ist,
- R ein Alkyl-Rest, insbesondere ein Methyl-Rest, ein Ethyl-Rest, ein n-Propyl-Rest oder ein Isopropyl-Rest, ist,
- Si Silizium ist,
- L ein divalenter linearer oder ein divalenter verzweigter Kohlenwasserstoff-Rest ist, und
- R¹ eine reaktive organische Gruppe, insbesondere ein Acrylatrest, ein Methacrylatrest, ein Vinylrest oder ein Allylrest, ist.

2. Primer-Zusammensetzung nach Anspruch 1, **dadurch gekennzeichnet, dass** der mindestens eine Fluoreszenzfarbstoff bei Einwirkung von ultravioletter Strahlung fluoresziert.

3. Primer-Zusammensetzung nach Anspruch 1 oder 2, **dadurch gekennzeichnet, dass** der mindestens eine Fluoreszenzfarbstoff ein optischer Aufheller, insbesondere ausgewählt aus der Gruppe bestehend aus Stilben-Verbindungen, Distyrylbenzol-Verbindungen, Distyrylbiphenyl-Verbindungen, Divinylstilben-Verbindungen, Triazinylaminostilben-Verbindungen, Stilbenyltriazol-Verbindungen, Stilbenylnaphthotriazol-Verbindungen, Bistriazolstilben-Verbindungen, Ethylen-Derivate, Phenylethylen-Derivate, Thiophen-Derivate, Cumarin-Derivate, Carbostyril-Derivate, 1,3-Diphenyl-2-pyrazoline, Naphthalimide, Verbindungen, bei denen ein kondensierter Aromat direkt mit einem Heteroaromaten, wie beispielsweise einem Thiazol, Pyrazol, Oxadiazol oder Triazin, verbunden ist, und Mischungen von wenigstens zwei der vorgenannten optischen Aufheller, ist.

4. Primer-Zusammensetzung nach einem der vorhergehenden Ansprüche, **dadurch gekennzeichnet, dass** der Fluoreszenzfarbstoff eine Struktur gemäß einer der nachfolgenden Formeln **1** bis **12** hat: 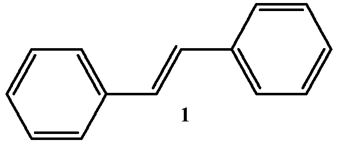 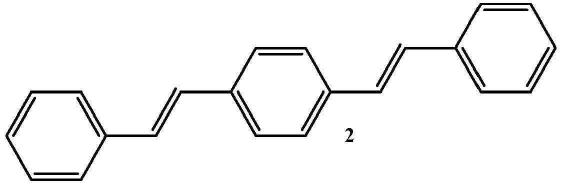 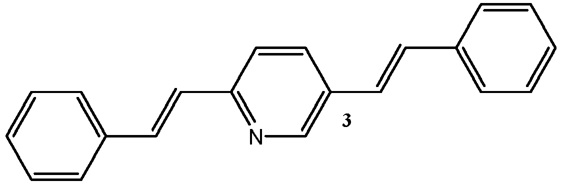 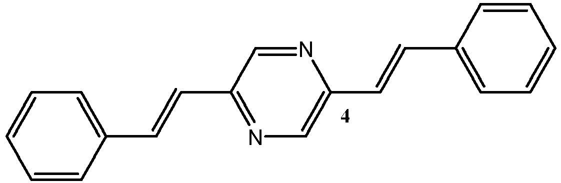 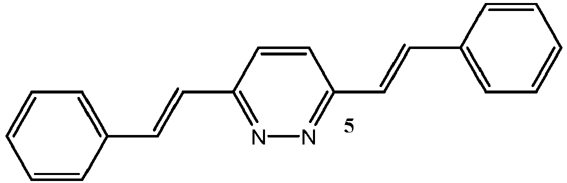 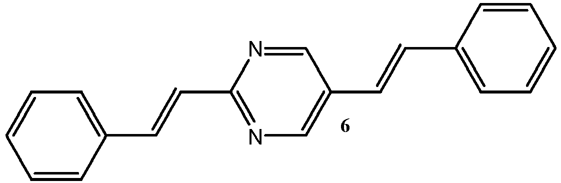 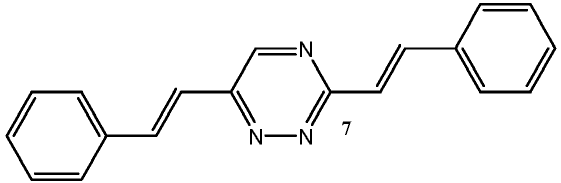 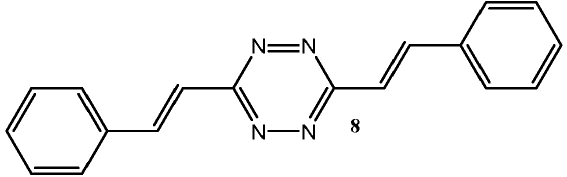 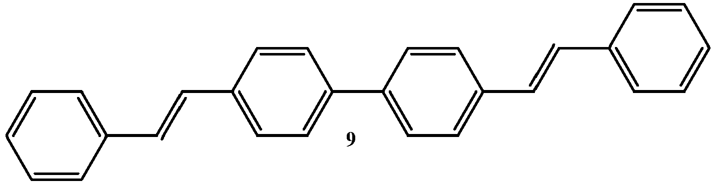 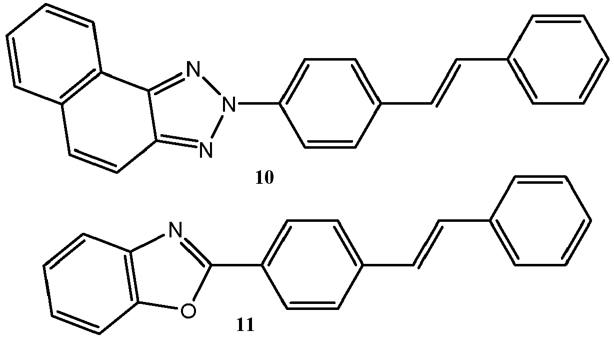 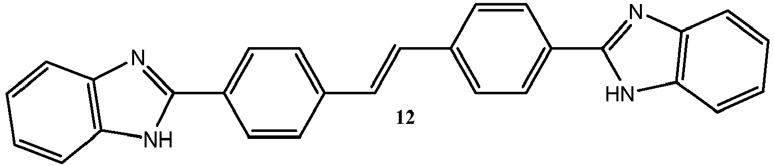 wobei einer oder mehrere der Ringe in jeder der obigen Formeln **1** bis **12** unabhängig voneinander durch eine oder mehrere Gruppen aus der Gruppe bestehend aus Alkylgruppe, Alkoxygruppe, Alkylcarbonylgruppe, Alkoxycarbonylgruppe, Acyloxygruppe, Carboxylgruppe, Nitrilgruppe, Aminogruppe, Hydroxylgruppe, Alkylsulfonylgruppe und Aminosulfonylgruppe substituiert sein kann/können.

5. Primer-Zusammensetzung nach einem der vorhergehenden Ansprüche, **dadurch gekennzeichnet, dass** es sich bei dem mindestens einen Fluoreszenzfarbstoff um eine Stilben-Verbindung, insbesondere eine Sulfonsäuregruppen und/oder Sulfonatgruppen tragende Stilben-Verbindung, vorzugsweise ein Triazinyl-Derivat von 4,4'-Diamino-2,2'-stilbendisulfonsäure, handelt.

6. Primer-Zusammensetzung nach einem der vorhergehenden Ansprüche, **dadurch gekennzeichnet, dass** der mindestens eine Fluoreszenzfarbstoff nachfolgende Formel **20** besitzt: 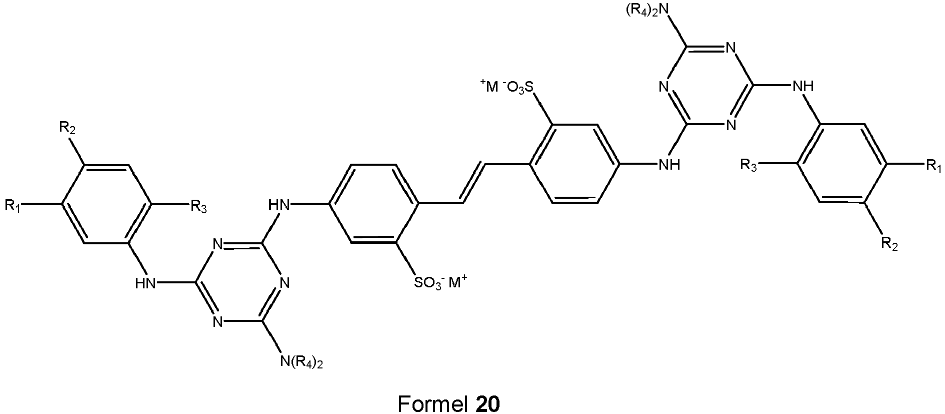 wobei
- R¹ = H, SO₃H oder SO₃ ⁻ M⁺ ist,
- R₂ = H, CH₃, SO₃H oder SO₃ ⁻ M⁺ ist,
- R₃ = H, SO₃H oder SO₃ ⁻ M⁺ ist
- R₄ = CH₂CH₃ oder CH₂CH₂OH ist und
- M⁺ = Na⁺, K⁺, NH₄* oder eine substituierte, insbesondere alkylierte, Ammoniumgruppe ist.

7. Primer-Zusammensetzung nach einem der vorhergehenden Ansprüche, **dadurch gekennzeichnet, dass** der mindestens eine Fluoreszenzfarbstoff nachfolgende Formel **21** besitzt: 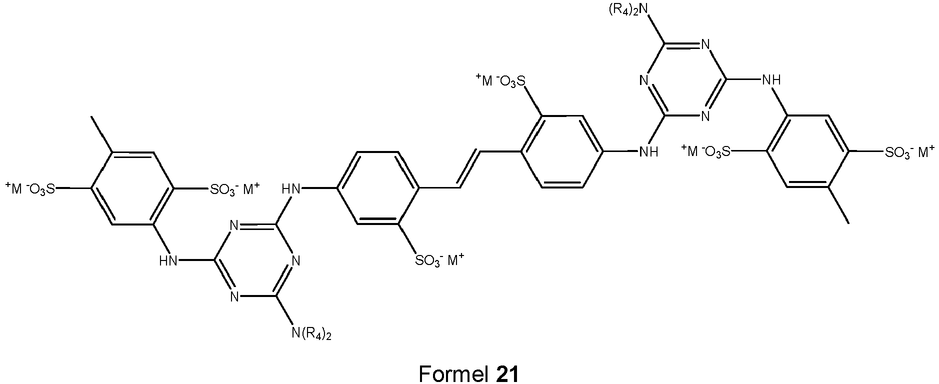 wobei
- R₄ = CH₂CH₃ oder CH₂CH₂OH ist und
- M⁺ = Na⁺, K⁺, NH₄* oder eine substituierte, insbesondere alkylierte, Ammoniumgruppe ist.

8. Primer-Zusammensetzung nach Anspruch 1 oder 2, **dadurch gekennzeichnet, dass** es sich bei dem mindestens einen Fluoreszenzfarbstoff um eine Seltenerdmetall-Verbindung, insbesondere eine Seltenerdmetall-Komplexverbindung, vorzugsweise ausgewählt aus der Gruppe bestehend aus Seltenerdmetall-Biketonat-Komplexverbindung, Seltenerdmetall-Acetonat-Komplexverbindung, Seltenerdmetall-Salicylat-Komplexverbindung und Mischungen von wenigstens zwei der vorgenannten Seltenerdmetall-Komplexverbindungen, handelt.

9. Primer-Zusammensetzung nach Anspruch 8, **dadurch gekennzeichnet, dass** das Seltenerdmetall ausgewählt ist aus der Gruppe bestehend aus Europium, Neodym, Samarium, Dysprosium und Terbium.

10. Primer-Zusammensetzung nach Anspruch 8 oder 9, **dadurch gekennzeichnet, dass** es sich bei der Seltenerdmetall-Komplexverbindung um eine Europium-Biketonat-Komplexverbindung handelt.

11. Primer-Zusammensetzung nach einem der vorhergehenden Ansprüche, **dadurch gekennzeichnet, dass** der mindestens eine Alkohol ausgewählt ist aus der Gruppe bestehend aus Ethanol, Ispropanol, Butanol und Mischungen von wenigstens zwei der vorgenannten Alkohole.

12. Verfahren zum Beschichten, insbesondere Bedrucken, eines Substrats, **dadurch gekennzeichnet, dass**
- eine Primer-Zusammensetzung nach einem der vorhergehenden Ansprüche auf mindestens einen Teil einer Oberfläche des Substrats in Form einer Primer-Schicht aufgebracht und
- der mindestens eine Fluoreszenzfarbstoff der Primer-Zusammensetzung bzw. der Primer-Schicht zum Fluoreszieren angeregt wird.

13. Substrat, **dadurch gekennzeichnet, dass** das Substrat mindestens teilweise mit einer Primer-Zusammensetzung nach einem der Ansprüche 1 bis 11 beschichtet, insbesondere bedruckt, ist.

## Claims

1. Primer composition for coating, more particularly printing, a substrate, where the primer composition comprises at least one fluorescent dye and at least one organosilane, **characterized in that** the primer composition further comprises at least one alcohol and the at least one organosilane possesses formula 23 below and/or formula 24 below:
(AcO)n(R)3-nSi-L-R1 formula **23**
where
- n is 1, 2 or 3, preferably 3,
- AcO is an acetoxy radical,
- R is an alkyl radical, more particularly a methyl radical, an ethyl radical, an n-propyl radical or an isopropyl radical, or an alkoxy radical, more particularly a methoxy radical, an ethoxy radical, an n-propoxy radical or an isopropoxy radical, or an aryloxy radical,
- Si is silicon,
- L is a divalent linear or a divalent branched hydrocarbon radical, and
- R¹ is a reactive organic group, more particularly an acrylate radical, a methacrylate radical, a vinyl radical or an allyl radical,
(R²O)ₙ(R)₃₋ₙSi-L-R¹ formula **24**
where
- n is 1, 2 or 3, preferably 3,
- R² is an alkyl radical, more particularly a methyl radical, an ethyl radical, an n-propyl radical or an isopropyl radical,
- O is oxygen,
- R is an alkyl radical, more particularly a methyl radical, an ethyl radical, an n-propyl radical or an isopropyl radical,
- Si is silicon,
- L is a divalent linear or a divalent branched hydrocarbon radical, and
- R¹ is a reactive organic group, more particularly an acrylate radical, a methacrylate radical, a vinyl radical or an allyl radical.

2. Primer composition according to Claim 1, **characterized in that** the at least one fluorescent dye fluoresces on exposure to ultraviolet radiation.

3. Primer composition according to Claim 1 or 2, **characterized in that** the at least one fluorescent dye is an optical brightener, more particularly selected from the group consisting of stilbene compounds, distyrylbenzene compounds, distyrylbiphenyl compounds, divinylstilbene compounds, triazinylaminostilbene compounds, stilbenyltriazole compounds, stilbenylnaphthotriazole compounds, bistriazolestilbene compounds, ethylene derivatives, phenylethylene derivatives, thiophene derivatives, coumarin derivatives, carbostyril derivatives, 1,3-diphenyl-2-pyrazolines, naphthalimides, compounds wherein a fused aromatic is connected directly to a heteroaromatic, such as, for example, to a thiazole, pyrazole, oxadiazole or triazine, and mixtures of at least two of the aforesaid optical brighteners.

4. Primer composition according to any of the preceding claims, **characterized in that** the fluorescent dye has a structure according to one of the following formulae **1** to **12:** 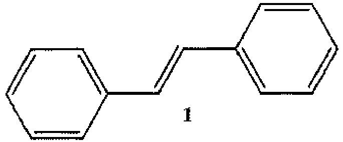 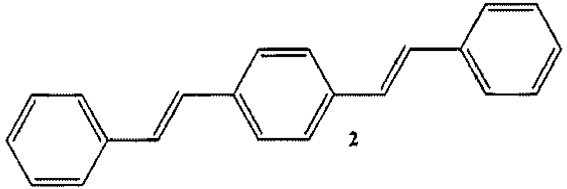 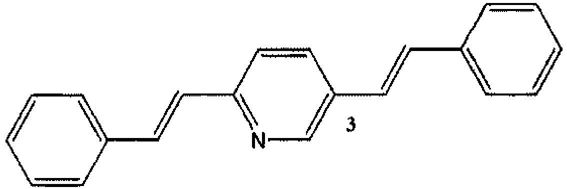 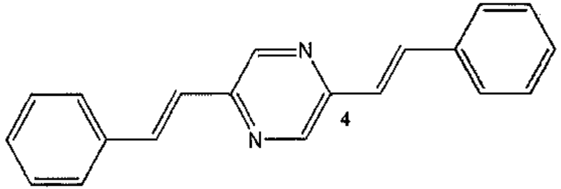 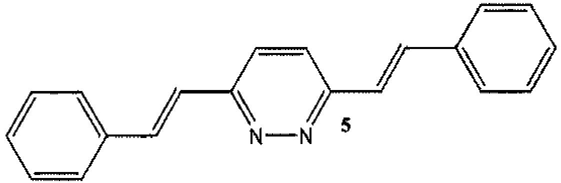 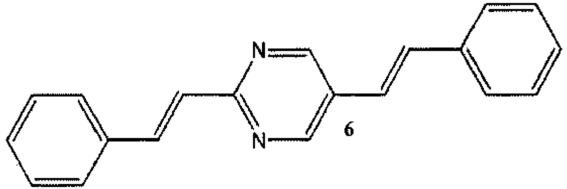 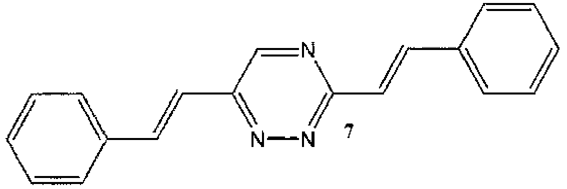 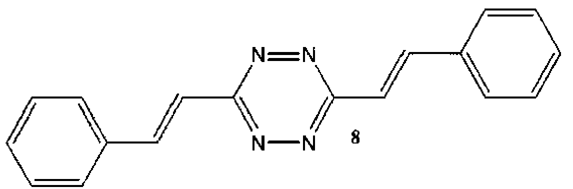 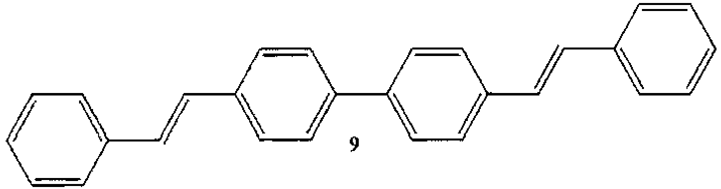 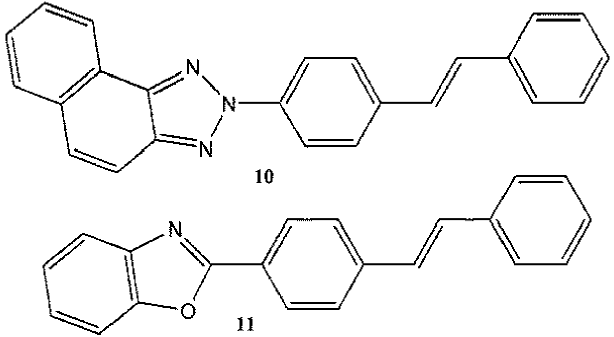 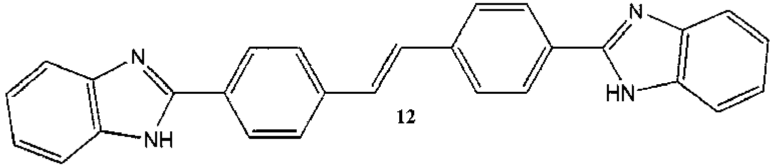 where one or more of the rings in each of the above formulae **1** to **12** may be substituted independently of one another by one or more groups from the group consisting of alkyl group, alkoxy group, alkylcarbonyl group, alkoxycarbonyl group, acyloxy group, carboxyl group, nitrile group, amino group, hydroxyl group, alkylsulfonyl group and aminosulfonyl group.

5. Primer composition according to any of the preceding claims, **characterized in that** the at least one fluorescent dye is a stilbene compound, more particularly a stilbene compound carrying sulfonic acid groups and/or sulfonate groups, preferably a triazinyl derivative of 4,4'-diamino-2,2'-stilbenedisulfonic acid.

6. Primer composition according to any of the preceding claims, **characterized in that** the at least one fluorescent dye possesses formula **20** below: 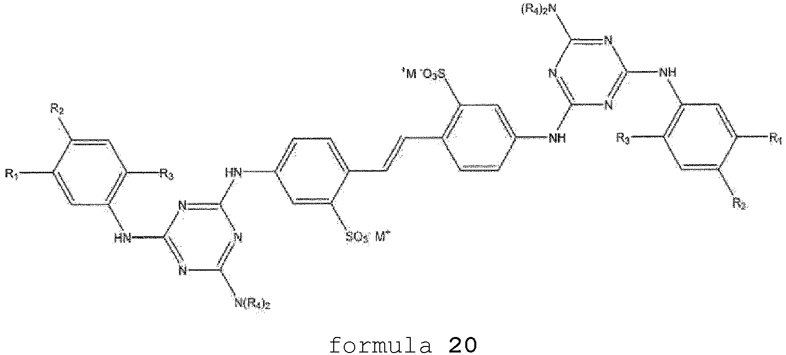 where
- R₁ is H, SO₃H or SO₃⁻M⁺,
- R₂ is H, CH₃, SO₃H or SO₃⁻M⁺,
- R₃ is H, SO₃H or SO₃⁻M⁺,
- R₄ is CH₂CH₃ or CH₂CH₂OH and
- M⁺ is Na⁺, K⁺, NH₄* or a substituted, more particularly alkylated, ammonium group.

7. Primer composition according to any of the preceding claims, **characterized in that** the at least one fluorescent dye possesses formula **21** below: 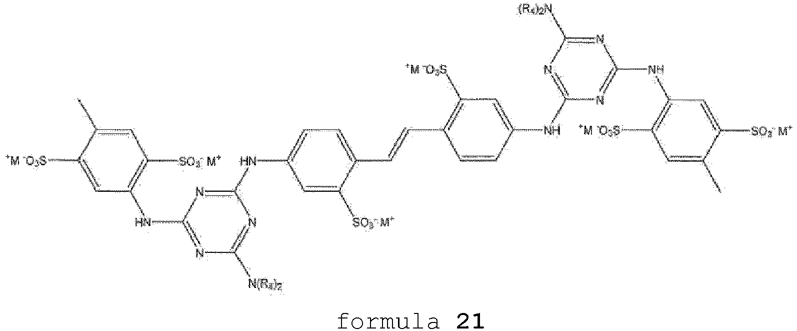 where
- R₄ is CH₂CH₃ or CH₂CH₂OH and
- M⁺ is Na⁺, K⁺, NH₄* or a substituted, more particularly alkylated, ammonium group.

8. Primer composition according to Claim 1 or 2, **characterized in that** the at least one fluorescent dye is a rare earth metal compound, more particularly a rare earth metal complex compound, preferably selected from the group consisting of rare earth metal-biketonate complex compound, rare earth metal-acetonate complex compound, rare earth metal-salicylate complex compound and mixtures of at least two of the aforesaid rare earth metal complex compounds.

9. Primer composition according to Claim 8, **characterized in that** the rare earth metal is selected from the group consisting of europium, neodymium, samarium, dysprosium and terbium.

10. Primer composition according to Claim 8 or 9, **characterized in that** the rare earth metal complex compound is a europium-biketonate complex compound.

11. Primer composition according to any of the preceding claims, **characterized in that** the at least one alcohol is selected from the group consisting of ethanol, isopropanol, butanol and mixtures of at least two of the aforesaid alcohols.

12. Method for coating, more particularly printing, a substrate, **characterized in that**
- a primer composition according to any of the preceding claims is applied to at least part of a surface of the substrate in the form of a primer coat, and
- the at least one fluorescent dye in the primer composition or the primer coat is excited to fluoresce.

13. Substrate, **characterized in that** the substrate is coated, more particularly printed, at least partly with a primer composition according to any of Claims 1 to 11.

## Revendications

1. Composition d'apprêt pour le revêtement, en particulier l'impression, d'un substrat, la composition d'apprêt présentant au moins un colorant fluorescent et au moins un organosilane, **caractérisée en ce que** la composition d'apprêt présente en outre au moins un alcool et ledit au moins un organosilane présente la formule 23 suivante et/ou formule 24 suivante :
(AcO)ₙ(R)₃₋ₙSi-L-R¹ Formule 23
dans laquelle
- n représente 1, 2 ou 3, de préférence 3,
- AcO représente un radical acétoxy,
- R représente un radical alkyle, en particulier un radical méthyle, un radical éthyle, un radical n-propyle ou un radical isopropyle, ou un radical alcoxy, en particulier un radical méthoxy, un radical éthoxy, un radical n-propoxy ou un radical isopropoxy, ou un radical aryloxy,
- Si représente silicium,
- L représente un radical hydrocarboné divalent linéaire ou divalent ramifié et
- R¹ représente un groupement organique réactif, en particulier un radical acrylate, un radical méthacrylate, un radical vinyle ou un radical allyle,
(R²O)ₙ(R)₃₋ₙSi-L-R¹ Formule 24
dans laquelle
- n représente 1, 2 ou 3, de préférence 3,
- R² représente un radical alkyle, en particulier un radical méthyle, un radical éthyle, un radical n-propyle ou un radical isopropyle,
- O représente oxygène,
- R représente un radical alkyle, en particulier un radical méthyle, un radical éthyle, un radical n-propyle ou un radical isopropyle,
- Si représente silicium,
- L représente un radical hydrocarboné divalent linéaire ou divalent ramifié et
- R¹ représente un groupement organique réactif, en particulier un radical acrylate, un radical méthacrylate, un radical vinyle ou un radical allyle.

2. Composition d'apprêt selon la revendication 1, **caractérisée en ce que** ledit au moins un colorant fluorescent émet une fluorescence sous l'action d'un rayonnement ultraviolet.

3. Composition d'apprêt selon la revendication 1 ou 2, **caractérisée en ce que** ledit au moins un colorant fluorescent est un azurant optique, en particulier choisi dans le groupe constitué par les composés de stilbène, les composés de distyrylbenzène, les composés de distyrylbiphényle, les composés de divinylstilbène, les composés de triazinylaminostilbène, les composés de stilbényltriazole, les composés de stilbénylnaphtotriazole, les composés de bistriazolstilbène, les dérivés d'éthylène, les dérivés de phényléthylène, les dérivés de thiophène, les dérivés de coumarine, les dérivés de carbostyryle, la 1,3-diphényl-2-pyrazoline, les naphtalimides, les composés dans lesquels un aromatique condensé est lié directement à un hétéroaromatique, comme par exemple un thiazole, un pyrazole, un oxadiazole ou une triazine et les mélanges d'au moins deux des azurants optiques susmentionnés.

4. Composition d'apprêt selon l'une des revendications précédentes, **caractérisée en ce que** le colorant fluorescent présente une structure selon l'une des formules 1 à 12 suivantes : 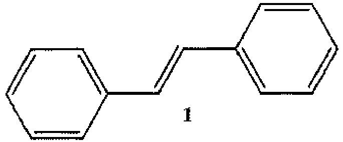 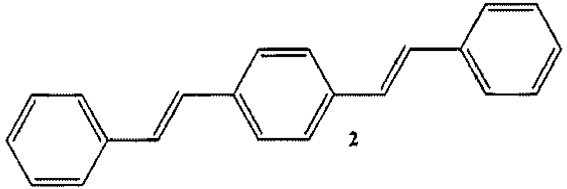 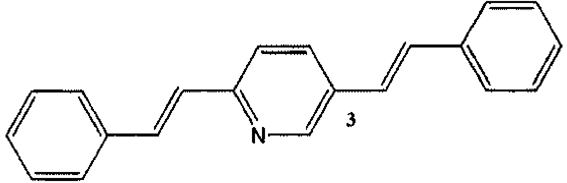 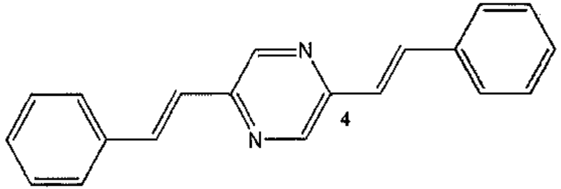 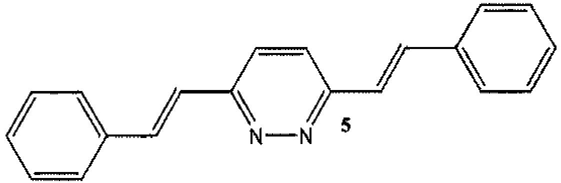 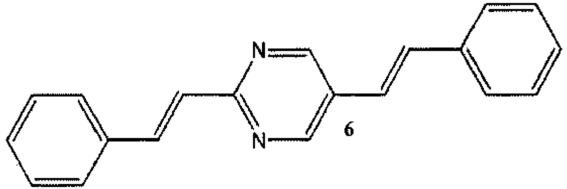 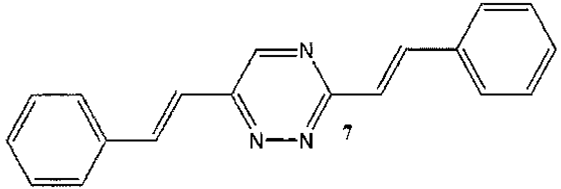 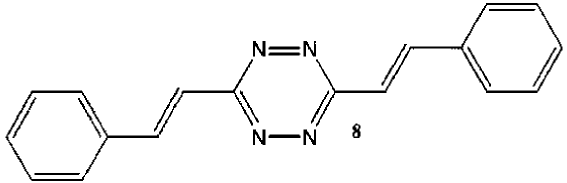 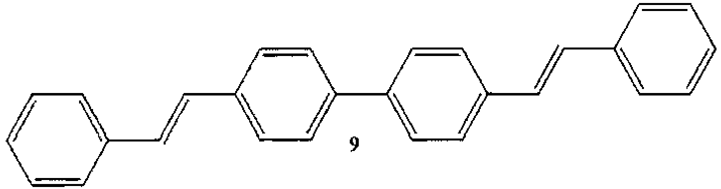 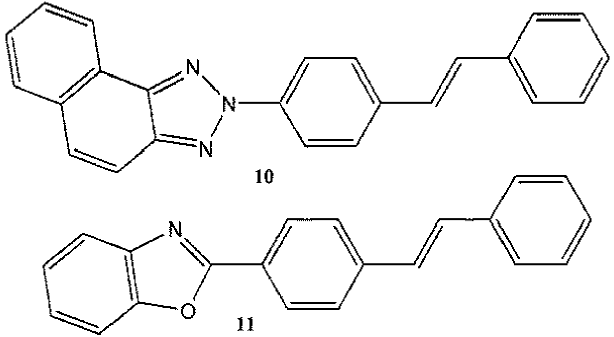 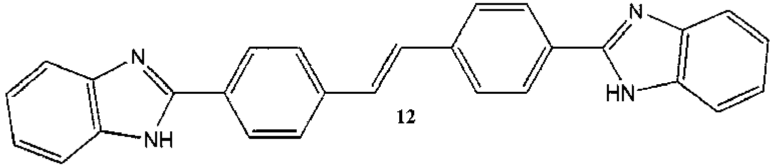 un ou plusieurs des cycles dans chacune des formules 1 à 12 ci-dessus pouvant être substitués, indépendamment les uns des autres, par un ou plusieurs groupements du groupe constitué par un groupement alkyle, alcoxy, alkylcarbonyle, alcoxycarbonyle, acyloxy, carboxyle, nitrile, amino, hydroxyle, alkylsulfonyle et aminosulfonyle.

5. Composition d'apprêt selon l'une des revendications précédentes, **caractérisée en ce qu'**il s'agit, pour ledit au moins un colorant fluorescent, d'un composé de stilbène, en particulier d'un composé de stilbène portant des groupements acide sulfonique et/ou des groupements sulfonate, de préférence d'un dérivé de triazinyle de l'acide 4,4'-diamino-2,2'-stilbènedisulfonique.

6. Composition d'apprêt selon l'une des revendications précédentes, **caractérisée en ce que** ledit au moins un colorant fluorescent présente la formule 20 suivante : 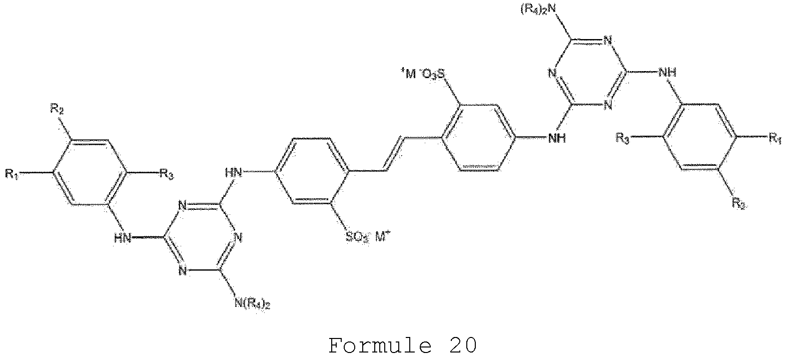 dans laquelle
- R₁ = H, SO₃H ou SO₃⁻M⁺,
- R₂ = H, CH₃, SO₃H ou SO₃⁻M⁺,
- R₃ = H, SO₃H ou SO₃⁻M⁺,
- R₄ = CH₂CH₃ ou CH₂CH₂OH et
- M⁺ = Na⁺, K⁺, NH₄⁺ ou un groupement ammonium substitué, en particulier alkylé.

7. Composition d'apprêt selon l'une des revendications précédentes, **caractérisée en ce que** ledit au moins un colorant fluorescent présente la formule 21 suivante : 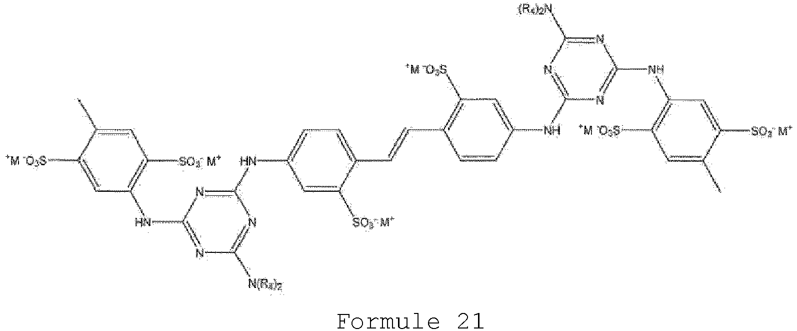 dans laquelle
- R₄ = CH₂CH₃ ou CH₂CH₂OH et
- M⁺ = Na⁺, K⁺, NH₄⁺ ou un groupe ammonium substitué, en particulier alkylé.

8. Composition d'apprêt selon la revendication 1 ou 2, **caractérisée en ce qu'**il s'agit, pour ledit au moins un colorant fluorescent, d'un composé de métal de terre rare, en particulier d'un composé complexe de métal de terre rare, de préférence choisi dans le groupe constitué par un composé complexe de bicétonate de métal de terre rare, un composé complexe d'acétonate de métal de terre rare, un composé complexe de salicylate de métal de terre rare et les mélanges d'au moins deux des composés complexes de métal de terre rare susmentionnés.

9. Composition d'apprêt selon la revendication 8, **caractérisée en ce que** le métal de terre rare est choisi dans le groupe constitué par l'europium, le néodyme, le samarium, le dysprosium et le terbium.

10. Composition d'apprêt selon la revendication 8 ou 9, **caractérisée en ce qu'**il s'agit, pour le composé complexe de métal de terre rare, d'un composé complexe de bicétonate d'europium.

11. Composition d'apprêt selon l'une des revendications précédentes, **caractérisée en ce que** ledit au moins un alcool est choisi dans le groupe constitué par l'éthanol, l'isopropanol, le butanol et les mélanges d'au moins deux des alcools susmentionnés.

12. Procédé de revêtement, en particulier d'impression, d'un substrat, **caractérisé en ce que**
- une composition d'apprêt selon l'une des revendications précédentes est appliquée sur au moins une partie d'une surface du substrat sous forme d'une couche d'apprêt et
- ledit au moins un colorant fluorescent de la composition d'apprêt ou, selon le cas, de la couche d'apprêt est excité en fluorescence.

13. Substrat, **caractérisé en ce que** le substrat est revêtu, au moins imprimé, au moins partiellement par une composition d'apprêt selon l'une des revendications 1 à 11.
